(19) Europäisches Patentamt

European Patent Office

Office européen des brevets

(11) **EP 1 145 190 B1**

(12) **EUROPÄISCHE PATENTSCHRIFT**

(45) Veröffentlichungstag und Bekanntmachung des Hinweises auf die Patenterteilung:
**25.06.2003  Patentblatt 2003/26**

(51) Int Cl.$^7$: **G06N 3/00**

(21) Anmeldenummer: **00931002.0**

(22) Anmeldetag: **03.04.2000**

(86) Internationale Anmeldenummer:
**PCT/DE00/01014**

(87) Internationale Veröffentlichungsnummer:
**WO 00/062250 (19.10.2000 Gazette 2000/42)**

(54) **ANORDNUNG MITEINANDER VERBUNDENER RECHENELEMENTE, VERFAHREN ZUR RECHNERGESTÜTZTEN ERMITTLUNG EINER DYNAMIK, DIE EINEM DYNAMISCHEN PROZESS ZUGRUNDE LIEGT UND VERFAHREN ZUM RECHNERGESTÜTZTEN TRAINIEREN EINER ANORDNUNG MITEINANDER VERBUNDENER RECHENELEMENTE**

ASSEMBLY OF INTERCONNECTED COMPUTING ELEMENTS, METHOD FOR COMPUTER-ASSISTED DETERMINATION OF A DYNAMIC WHICH IS THE BASE OF A DYNAMIC PROCESS, AND METHOD FOR COMPUTER-ASSISTED TRAINING OF AN ASSEMBLY OF INTERCONNECTED ELEMENTS

ENSEMBLE DE PLUSIEURS ELEMENTS DE CALCUL RELIES ENTRE EUX, PROCEDE DE DETERMINATION ASSISTEE PAR ORDINATEUR D'UNE DYNAMIQUE SE TROUVANT A LA BASE D'UN PROCESSUS DYNAMIQUE ET PROCEDE POUR L'ENTRAINEMENT ASSISTE PAR ORDINATEUR D'UN ENSEMBLE D'ELEMENTS DE CALCUL RELIES ENTRE EUX

(84) Benannte Vertragsstaaten:
**DE FR GB IT NL**

(30) Priorität: **12.04.1999  DE 19916356**

(43) Veröffentlichungstag der Anmeldung:
**17.10.2001  Patentblatt 2001/42**

(73) Patentinhaber: **SIEMENS AKTIENGESELLSCHAFT**
**80333 München (DE)**

(72) Erfinder:
• **NEUNEIER, Ralf**
  **D-81667 München (DE)**
• **ZIMMERMANN, Hans-Georg**
  **D-82319 Starnberg/Percha (DE)**

(56) Entgegenhaltungen:
**US-A- 5 761 386**

• **TEMPLEMAN J N: "RACE NETWORKS A THEORY OF COMPETITIVE RECOGNITION NETWORKS BASED ON THE RATE OF REACTIVATION OF NEURONS IN CORTICAL COLUMNS" PROCEEDINGS OF THE INTERNATIONAL CONFERENCE ON NEURAL NETWORKS,US,NEW YORK, IEEE, Bd. -, 24. Juli 1988 (1988-07-24), Seiten 9-16, XP000744244**
• **MAKOTO HIRAHARA ET AL: "A NEURAL NETWORK MODEL FOR VISUAL MOTION DETECTION THAT CAN EXPLAIN PSYCHOPHYSICAL AND NEUROPHYSIOLOGICAL PHENOMENA" BIOLOGICAL CYBERNETICS,DE,SPRINGER VERLAG, HEIDELBERG, Bd. 68, Nr. 3, 1992, Seiten 247-252, XP000332691 ISSN: 0340-1200**

Bemerkungen:
Derzeit sind die WIPO-Publikationsdaten A3 nicht verfügbar.

**Beschreibung**

Die Erfindung betrifft eine Anordnung miteinander verbundener Rechenelemente, Verfahren zur rechnergestützten Ermittlung einer Dynamik, die einem dynamischen Prozeß zugrunde liegt sowie ein Verfahren'zum rechnergestützten Trainieren einer Anordnung miteinander verbundener Rechenelemente.

Aus [1] ist es bekannt, zur Ermittlung einer Dynamik, die einem dynamischen Prozeß zugrunde liegt, eine Anordnung miteinander verbundener Rechenelemente einzusetzen.

Allgemein wird ein dynamischer Prozeß üblicherweise durch eine Zustandsübergangsbeschreibung, die für einen Beobachter des dynamischen Prozesses nicht sichtbar ist, und eine Ausgangsgleichung, die beobachtbare Größen des technischen dynamischen Prozesses beschreibt, beschrieben.

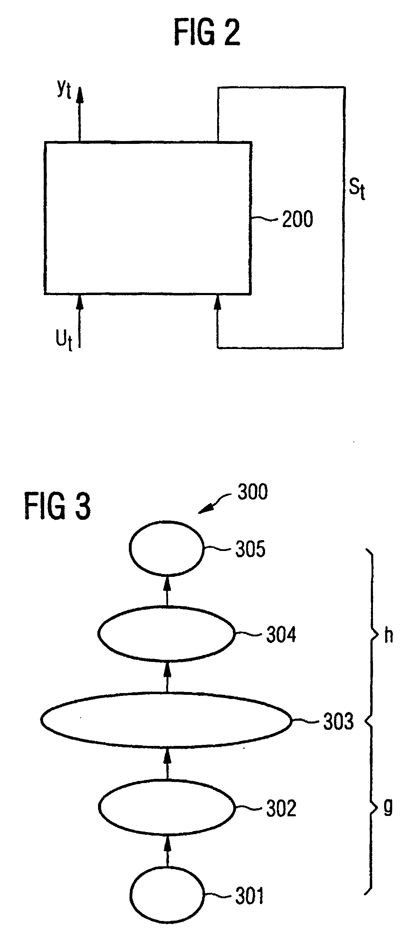

Eine solche Anordnung ist in **Fig.2** dargestellt.

Ein dynamisches System 200 unterliegt dem Einfluß einer externen Eingangsgröße u vorgebbarer Dimension, wobei eine Eingangsgröße $u_t$ zu einem Zeitpunkt t mit $u_t$ bezeichnet wird:

$$u_t \in \mathfrak{R}^l,$$

wobei mit l eine natürliche Zahl bezeichnet wird.

Die Eingangsgröße $u_t$ zu einem Zeitpunkt t verursacht eine Veränderung des dynamischen Prozesses, der in dem dynamischen System 200 abläuft.

Ein innerer Zustand $s_t$ ($s_t \in \mathfrak{R}^m$) vorgebbarer Dimension m zu einem Zeitpunkt t ist für einen Beobachter des dynamischen Systems 200 nicht beobachtbar.

In Abhängigkeit vom inneren Zustand $s_t$ und der Eingangsgröße $u_t$ wird ein Zustandsübergang des inneren Zustandes $s_t$ des dynamischen Prozesses verursacht und der Zustand des dynamischen Prozesses geht über in einen Folgezustand $s_{t+1}$ zu einem folgenden Zeitpunkt t+1.

Dabei gilt:

$$s_{t+1} = f(s_t, u_t). \tag{1}$$

wobei mit f(.) eine allgemeine Abbildungsvorschrift bezeichnet wird.

Eine von einem Beobachter des dynamischen Systems 200 beobachtbare Ausgangsgröße $y_t$ zu einem Zeitpunkt t hängt ab von der Eingangsgröße $u_t$ sowie dem inneren Zustand $s_t$.

Die Ausgangsgröße $y_t$ ($y_t \in \mathfrak{R}^n$) ist vorgebbarer Dimension n.

Die Abhängigkeit der Ausgangsgröße $y_t$ von der Eingangsgröße $u_t$ und dem inneren Zustand $s_t$ des dynamischen Prozesses ist durch folgende allgemeine Vorschrift gegeben:

$$y_t = g(s_t, u_t), \tag{2}$$

wobei mit g(.) eine allgemeine Abbildungsvorschrift bezeichnet wird.

Zur Beschreibung des dynamischen Systems 200 wird in [1] eine Anordnung miteinander verbundener Rechenelemente in Form eines neuronalen Netzes miteinander verbundener Neuronen eingesetzt. Die Verbindungen zwischen den Neuronen des neuronalen Netzes sind gewichtet. Die Gewichte des neuronalen Netzes sind in einem Parametervektor v zusammengefaßt.

Somit hängt ein innerer Zustand eines dynamischen Systems, welches einem dynamischen Prozeß unterliegt, gemäß folgender Vorschrift von der Eingangsgröße $u_t$ und dem inneren Zustand des vorangegangenen Zeitpunktes $s_t$ und dem Parametervektor v ab:

$$s_{t+1} = NN(v, s_t, u_t), \tag{3}$$

wobei mit NN(.) eine durch das neuronale Netz vorgegebene Abbildungsvorschrift bezeichnet wird.

Die aus [1] bekannte und als <u>T</u>ime <u>D</u>elay <u>R</u>ecurrent <u>N</u>eural <u>N</u>etwork (TDRNN) bezeichnete Anordnung wird in einer Trainingsphase derart trainiert, daß zu einer Eingangsgröße $u_t$ jeweils eine Zielgröße $y_t^d$ an einem realen dynamischen System ermittelt wird. Das Tupel (Eingangsgröße, ermittelte Zielgröße) wird als Trainingsdatum bezeichnet. Eine Vielzahl solcher Trainingsdaten bilden einen Trainingsdatensatz.

Mit dem Trainingsdatensatz wird das TDRNN trainiert. Eine Übersicht über verschiedene Trainingsverfahren ist ebenfalls in [1] zu finden.

Es ist an dieser Stelle zu betonen, daß lediglich die Ausgangsgröße $y_t$ zu einem Zeitpunkt t des dynamischen Systems 200 erkennbar ist. Der innere Systemzustand $s_t$ ist nicht beobachtbar.

In der Trainingsphase wird üblicherweise folgende Kostenfunktion E minimiert:

$$E = \frac{1}{T} \sum_{t=1}^{T} \left( y_t - y_t^d \right)^2 \rightarrow \min_{f,g}, \qquad (4)$$

wobei mit T eine Anzahl berücksichtigter Zeitpunkte bezeichnet wird.

Aus [2] ist ein sogenannter neuronaler Autoassoziator bekannt (vgl. **Fig.3**).

Der Autoassoziator 300 besteht aus einer Eingangsschicht 301, drei verdeckten Schichten 302, 303, 304 sowie einer Ausgangsschicht 305.

Die Eingangsschicht 301 sowie eine erste verdeckte Schicht 302 und eine zweite verdeckte Schicht 303 bilden eine Einheit, mit der eine erste nichtlineare Koordinatentransformation g durchführbar ist.

Die zweite verdeckte Schicht 303 bildet gemeinsam mit einer dritten verdeckten Schicht 304 und der Ausgangsschicht 305 eine zweite Einheit, mit der eine zweite nichtlineare Koordinatentransformation h durchführbar ist.

Dieses aus [2] bekannte fünfschichtige neuronale Netz 300 weist die Eigenschaft auf, daß eine Eingangsgröße $x_t$ auf einen inneren Systemzustand transformiert wird gemäß der ersten nichtlinearen Koordinatentransformation g. Ausgehend von der zweiten verdeckten Schicht 303 wird unter Verwendung der dritten verdeckten Schicht 304 hin zu der Ausgangsschicht 305 unter Verwendung der zweiten nicht linearen Koordinatentransformation h der innere Systemzustand im wesentlichen auf die Eingangsgröße $x_t$ rücktransformiert. Ziel dieser bekannten Struktur ist die Abbildung der Eingangsgröße $x_t$ in einem ersten Zustandsraum X auf den inneren Zustand $s_t$ in einem zweiten Zustandsraum S, wobei die Dimension des zweiten Zustandsraum Dim(S) kleiner sein soll als die Dimension des ersten Zustandsraums Dim(X), um eine Datenkompression in der versteckten Schicht des Neuronalen Netzes zu erreichen. Die Rücktransformation in den ersten Zustandsraum X entspricht in diesem Fall einer Dekompression.

In [3] ist ferner ein Überblick über Grundlagen neuronaler Netze und die Anwendungsmöglichkeiten neuronaler Netze im Bereich der Ökonomie zu finden.

Aus [4] ist ein neuronales Netz zur Vorhersage ausländischer Wechselkurse aus einer Zeitreihe von Wechselkursdaten bekannt. Die Wechselkursdaten werden differenzcodiert und logarithmisch transformiert. Die transformierten Wechselkursdaten werden symbolisch dargestellt und von einem neuronalen Netz, einem "self-organizing map", ausgewertet und eine Vorhersage ermittelt.

Die bekannten Anordnungen und Verfahren weisen insbesondere den Nachteil auf, daß eine Identifikation bzw. Modellierung eines dynamischen Systems, welches eine Eingangsgröße mit einer großen Dimension aufweist, d.h. dessen Struktur im Zeitbereich sehr komplex ist, nicht möglich ist.

Somit liegt der Erfindung das Problem zugrunde, eine Anordnung miteinander verbundener Rechenelemente anzugeben, mit der eine Modellierung eines dynamischen Systems möglich ist und welche Anordnung nicht den oben beschriebenen Nachteilen der bekannten Anordnungen unterliegt.

Ferner liegt der Erfindung das Problem zugrunde, ein Verfahren zur rechnergestützten Ermittlung einer Dynamik, die einem dynamischen Prozeß zugrunde liegt, anzugeben für einen dynamischen Prozeß, bei dem der dynamische Prozess in vielen Fällen mit größerer Genauigkeit als mit den bekannten Verfahren ermittelt werden kann.

Die Probleme werden durch die Anordnung sowie die Verfahren mit den Merkmalen gemäß den unabhängigen Ansprüchen gelöst.

Die Anordnung miteinander verbundener Rechenelemente weist folgende Merkmale auf:

a) erste Eingangs-Rechenelemente, denen erste Zeitreihenwerte, welche jeweils einen Zustand eines Systems zu einem Zeitpunkt beschreiben, zuführbar sind,

b) Transformations-Rechenelemente zur Transformation der ersten Zeitreihenwerte in einen vorgegebenen Raum, welche erste Transformations-Rechenelemente mit den ersten Eingangs-Rechenelementen verbunden sind, und an welchen Transformations-Rechenelementen transformierte Signale abgreifbar sind, wobei zumindest zwei transformierte Signale jeweils aufeinanderfolgende Zeitpunkte betreffen,

c) ein zweites Eingangs-Rechenelement, welchem zweite Zeitreihenwerte, welche jeweils auf einen Zustand des Systems Einfluß nehmen, zuführbar sind,

d) ein erstes Verbund-Rechenelement, welches mit dem zweiten Eingangs-Rechenelement und mit einem ersten und einem zweiten Transformations-Rechenelementen derart verbunden ist, daß dem ersten Verbund-Rechenelement das transformierte Signal des ersten Transformations-Rechenelement zuführbar ist und ein an dem ersten Verbund-Rechenelement abgreifbares Signal dem zweiten Transformations-Rechenelement zuführbar ist,

e) Ausgangs-Rechenelemente, welche mit den Transformations-Rechenelementen verbunden sind, wobei an den Ausgangs-Rechenelementen jeweils ein Ausgangssignal abgreifbar ist.

Ein Verfahren zur rechnergestützten Ermittlung einer Dynamik, die einem dynamischen Prozeß zugrunde liegt, weist folgende Merkmale auf:

a) der dynamische Prozeß wird durch eine erste Zeitreihe mit Zeitreihenwerten in einem ersten Zustandsraum beschrieben, wobei mindestens ein erster Zeitreihenwert der ersten Zeitreihe einen Zustand des dynamischen Prozesses zu einem ersten Zeitpunkt beschreibt,

b) der erste Zeitreihenwert der ersten Zeitreihe wird in einen zweiten Zustandsraum transformiert,

c) der dynamische Prozeß wird durch eine zweite Zeitreihe mit Zeitreihenwerten in einem dritten Zustandsraum beeinflußt, wobei mindestens ein erster Zeitreihenwert der zweiten Zeitreihe einen Zustand des dynamischen Prozesses beeinflußt,

d) der erste Zeitreihenwert der ersten Zeitreihe in dem zweiten Zustandsraum wird unter Verwendung des ersten Zeitreihenwertes der zweiten Zeitreihe in dem zweiten Zustandsraum einer Abbildung auf einen zweiten Zeitreihenwert der ersten Zeitreihe in dem zweiten Zustandsraum unterzogen,

e) aus den Zeitreihenwerten in dem zweiten Zustandsraum wird die Dynamik des dynamischen Prozesses ermittelt.

Bei einem Verfahren zur rechnergestützten Ermittlung einer Dynamik, die einem dynamischen Prozeß zugrunde liegt, unter Verwendung einer Anordnung miteinander verbundener Rechenelemente wird der Anordnung ein Eingangssignal zugeführt und von der Anordnung wird ein erstes Ausgangssignal ermittelt, aus dem die Dynamik ermittelt wird. Die Anordnung weist dabei folgenden Aufbau auf:

a) erste Eingangs-Rechenelemente, denen erste Zeitreihenwerte, welche jeweils einen Zustand eines Systems zu einem Zeitpunkt beschreiben, zuführbar sind,

b) Transformations-Rechenelemente zur Transformation der ersten Zeitreihenwerte in einen vorgegebenen Raum, welche erste Transformations-Rechenelemente mit den ersten Eingangs-Rechenelementen verbunden sind, und an welchen Transformations-Rechenelementen transformierte Signale abgreifbar sind, wobei zumindest zwei transformierte Signale jeweils aufeinanderfolgende Zeitpunkte betreffen,

c) ein zweites Eingangs-Rechenelement, welchem zweite Zeitreihenwerte, welche jeweils auf einen Zustand des Systems Einfluß nehmen, zuführbar sind,

d) ein erstes Verbund-Rechenelement, welches mit dem zweiten Eingangs-Rechenelement und mit einem ersten und einem zweiten Transformations-Rechenelementen derart verbunden ist, daß dem ersten Verbund-Rechenelement das transformierte Signal des ersten Transformations-Rechenelement zuführbar ist und ein an dem ersten Verbund-Rechenelement abgreifbares Signal dem zweiten Transformations-Rechenelement zuführbar ist,

e) Ausgangs-Rechenelemente, welche mit den Transformations-Rechenelementen verbunden sind, wobei an den Ausgangs-Rechenelementen jeweils ein Ausgangssignal abgreifbar ist.

Bei einem Verfahren zum rechnergestützten Trainieren einer Anordnung miteinander verbundener Rechenelemente wird die Anordnung unter Verwendung vorgegebener Trainingsdaten trainiert, wobei die Anordnung folgende Komponenten aufweist:

a) mit ersten Eingangs-Rechenelementen, denen erste Zeitreihenwerte, welche jeweils einen Zustand eines Systems zu einem Zeitpunkt beschreiben, zuführbar sind,

b) mit Transformations-Rechenelementen zur Transformation der ersten Zeitreihenwerte in einen vorgegebenen Raum, welche erste Transformations-Rechenelemente mit den ersten Eingangs-Rechenelementen verbunden sind, und an den Transformations-Rechenelementen transformierte Signale abgreifbar sind, wobei zumindest zwei transformierte Signale jeweils aufeinanderfolgende Zeitpunkte betreffen,

c) mit einem zweiten Eingangs-Rechenelement, welchem zweite Zeitreihenwerte, welche jeweils auf einen Zustand des Systems Einfluß nehmen, zuführbar sind,

d) mit einem ersten Verbund-Rechenelement, welches mit dem zweiten Eingangs-Rechenelement und mit einem ersten und einem zweiten Transformations-Rechenelementen derart verbunden ist, daß dem ersten Verbund-Rechenelement das transformierte Signal des ersten Transformations-Rechenelement zuführbar ist und ein an dem ersten Verbund-Rechenelement abgreifbares Signal dem zweiten Transformations-Rechenelement zuführbar ist,

e) mit Ausgangs-Rechenelementen, welche mit den Transformations-Rechenelementen verbunden sind, wobei an den Ausgangs-Rechenelementen jeweils ein Ausgangssignal abgreifbar ist.

Durch die Erfindung wird die Modellierung eines dynamischen Systems, welches eine hochdimensionale Eingangsgröße in einem Zustandsraum aufweist, in einem neuen Zustandsraum möglich, in welchem das System eine geringere Dimension aufweist, so daß eine weitere Entwicklung des Systems zu einem folgenden Zeitpunkt einfacher und genauer vorhersagbar wird.

Ferner weist die Erfindung den Vorteil auf, daß die weitere Entwicklung des Systems zu einem folgenden Zeitpunkt auch dadurch genauer vorhersagbar ist, daß externe Einflußgrößen berücksichtigbar sind.

Bevorzugte Weiterbildungen der Erfindung ergeben sich aus den abhängigen Ansprüchen.

Die im weiteren beschriebenen Weiterbildungen beziehen sich sowohl auf die Verfahren und die Anordnung.

Die Erfindung kann sowohl in Software als auch in Hardware, beispielsweise unter verwendung einer speziellen elektrischen Schaltung, realisiert werden.

Bei komplexen dynamischen Systemen können die Zeitreihenwerte Vektoren mit einer vorgebbaren Dimension sein.

Bevorzugt sind zumindest ein Teil der Rechenelemente künstliche Neuronen.

Die Verbindungen zwischen den Rechenelementen können variabel ausgestaltet und gewichtet sein.

In einer bevorzugten Ausführungsform weisen zumindest Teile der Verbindungen gleiche Gewichtswerte auf.

Bei einer Anordnung gemäß einer Weiterbildung wird der zweite Zeitreihenwert der ersten Zeitreihe in dem zweiten Zustandsraum in den ersten Zustandsraum rücktransformiert.

Eine Anordnung gemäß einer Weiterbildung wird derart trainiert, daß in einem ersten Trainingsschritt eine Kompression und eine Dekompression trainiert wird. Anschließend wird in einem zweiten Trainingsschritt eine Vorhersage trainiert.

Anordnungen gemäß Weiterbildungen weisen zweite und/oder dritte Verbund-Rechenelemente, die jeweils mit einem Eingangs-Rechenelement und einem Transformations-Rechenelement und/oder jeweils mit einem Ausgangs-Rechenelement und einem Transformations-Rechenelement verbunden sind.

In einer Ausgestaltung weist eine Anordnung weitere zueinander zugehörige Rechenelemente auf, welche mit einem Ausgangs-Rechenelement verbunden sind und mit welchen weiteren zueinander zugehörigen Rechenelementen eine vorgebbare Transformation durchführbar ist. Die weiteren zueinander zugehörigen Rechenelemente werden in einem weiteren Trainingsschritt trainiert.

In einer Weiterbildung wird unter Verwendung der vorgebbaren Transformation ein optimierter Zustand des dynamischen Systems ermittelt.

Bevorzugt weist die vorgebbare Transformation folgende Vorschrift auf:

$$a_i(x_1, \ldots, x_m, w_1, \ldots, w_m) = \frac{\mu_i * \exp(w_i * x_i)}{\sum\limits_{k=1}^{m} \mu_k * \exp(w_k * x_k)}$$

mit:

i, k          : Indizes
m           : Anzahl der vorgegeben Aktien, m = 100
$a_i$          : Gewichtung einer Aktie i zu einem Zeitpunkt (t+1)
$\mu_i$          : vorgegebene Gewichtung einer Aktie i in einem Vergleichs-Portfolio (Benchmark-Asset)
$w_1, \ldots, w_m$    : Parameter bzw. Gewichte
$x_1, \ldots, x_m$    : prognostizierte Aktienkurse der vorgegebenen Aktien zu dem Zeitpunkt (t+1)
exp(...)     : Exponentialfunktion.

Der dynamische Prozeß kann ein dynamischer Prozeß in einem Reaktor, insbesondere in einem chemischen Reaktor sein, allgemein jeder dynamische Prozeß, der in einem technischen dynamischen System abläuft. Ferner können die Anordnung bzw. die Verfahren im Rahmen einer Modellierung eines ökonomischen Prozesses, insbesondere eines Finanzmarkts, eingesetzt werden. Allgemein eignen sich die Verfahren und die Anordnungen sehr gut zur Prognose makroökonomischer Dynamiken.

Die Zeitreihenwerte können aus physikalischen Signalen ermittelt werden.

Ausführungsbeispiele der Erfindung sind in den Figuren dargestellt und werden im weiteren näher erläutert:

Es zeigen

Figur 1        eine Skizze einer Anordnung gemäß eines ersten Ausführungsbeispiels;

Figur 2        eine Skizze einer allgemeinen Beschreibung eines dynamischen Systems;

Figur 3        eine Skizze eines Autoassoziators gemäß dem Stand der Technik;

Figur 4        eine Skizze eines chemischen Reaktors, von dem Größen gemessen werden, welche mit der Anordnung gemäß dem ersten Ausführungsbeispiel weiterverarbeitet werden;

Figuren 5a und 5b        Skizzen von Anordnungen gemäß dem ersten Ausführungsbeispiel bei einem Training;

Figur 6        eine Skizze der Anordnung gemäß einem zweiten Ausführungsbeispiel;

Figur 7        eine Skizze, welche einen Verfahrensablauf gemäß dem ersten oder zweiten Ausführungsbeispiel beschreibt;

Figur 8        eine Skizze einer Anordnung eines TDRNN, welche mit endlich vielen Zuständen über die Zeit entfaltet ist.

**Erstes Ausführungsbeispiel: Chemischer Reaktor**

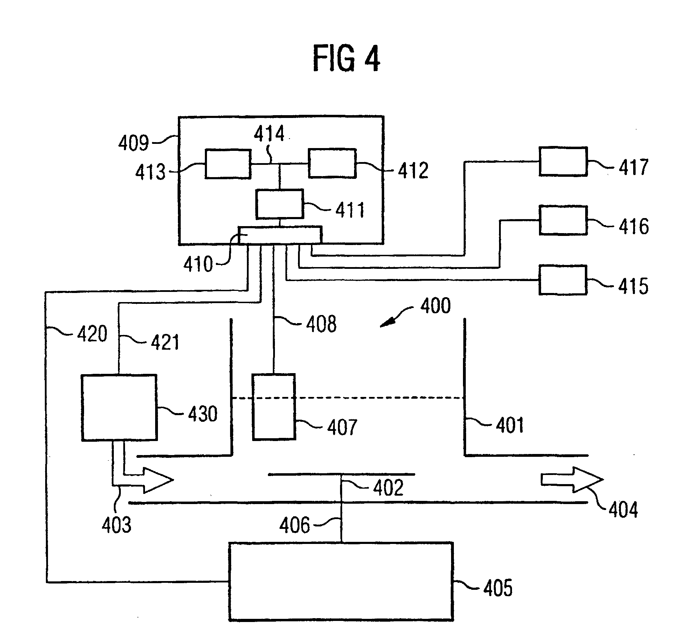

**Fig.4** zeigt einen chemischen Reaktor 400, der mit einer chemischen Substanz 401 gefüllt ist. Der chemische Reaktor 400 umfaßt einen Rührer 402, mit dem die chemische Substanz 401 gerührt wird. In den chemischen Reaktor 400 einfließende weitere chemische Substanzen 403 reagieren während eines vorgebbaren Zeitraums in dem chemischen Reaktor 400 mit der in dem chemischen Reaktor 400 bereits enthaltenen chemischen Substanz 401. Eine aus dem Reaktor 400 ausfließende Substanz 404 wird aus dem chemischen Reaktor 400 über einen Ausgang abgeleitet.

Der Rührer 402 ist über eine Leitung mit einer Steuereinheit 405 verbunden, mit der über ein Steuersignal 406 eine Rührfrequenz des Rührers 402 einstellbar ist.

Ferner ist ein Meßgerät 407 vorgesehen, mit dem Konzentrationen von in der chemischen Substanz 401 enthaltenen chemischen Stoffe gemessen werden.

Meßsignale 408 werden einem Rechner 409 zugeführt, in dem Rechner 409 über eine Eingangs-/Ausgangsschnittstelle 410 und einem Analog/Digital-Wandler 411 digitalisiert und in einem Speicher 412 gespeichert. Ein Prozessor 413 ist ebenso wie der Speicher 412 über einen Bus 414 mit dem Analog/Digital-Wandler 411 verbunden. Der Rechner 409 ist ferner über die Eingangs-/Ausgangsschnittstelle 410 mit der Steuerung 405 des Rührers 402 verbunden und somit steuert der Rechner 409 die Rührfrequenz des Rührers 402.

Der Rechner 409 ist ferner über die Eingangs-/Ausgangsschnittstelle 410 mit einer Tastatur 415, einer Computermaus 416 sowie einem Bildschirm 417 verbunden.

Der chemische Reaktor 400 als dynamisches technisches System 200 unterliegt somit einem dynamischen Prozeß.

Der chemische Reaktor 400 wird mittels einer Zustandsbeschreibung beschrieben. Eine Eingangsgröße $x_t$, welche eine hochdimensionale Eingangsgröße ist, setzt sich in diesem Fall zusammen aus Angaben über die Konzentrationen von in der chemischen Substanz 401 enthaltenen chemischen Stoffe.

Eine weitere Eingangsgröße $e_t$, welche Einflußgrößen des Reaktors 400 berücksichtigt, setzt sich zusammen aus einer Angabe über die Temperatur, die in dem chemischen Reaktor 400 herrscht, sowie dem in dem chemischen Reaktor 400 herrschenden Druck und der zu dem Zeitpunkt t eingestellten Rührfrequenz.

Ziel der im weiteren beschriebenen Modellierung des chemischen Reaktors 400 ist die Bestimmung der dynamischen Entwicklung der Stoffkonzentrationen, um somit eine effiziente Erzeugung eines zu produzierenden vorgebbaren Zielstoffes als ausfließende Substanz 404 zu ermöglichen.

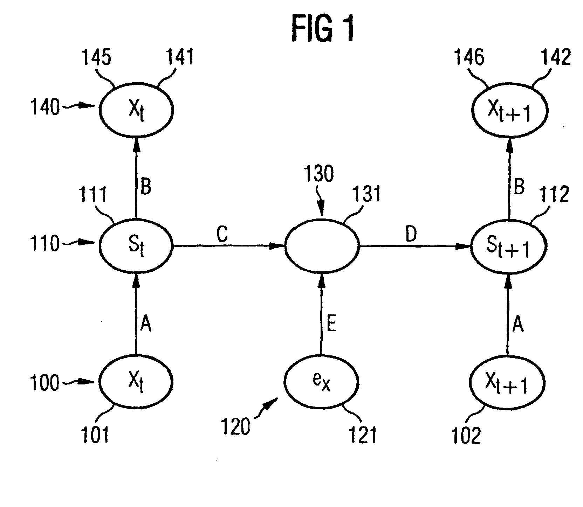

Dies erfolgt unter Verwendung der im weiteren beschriebenen und in der **Fig.1** dargestellten Anordnung.

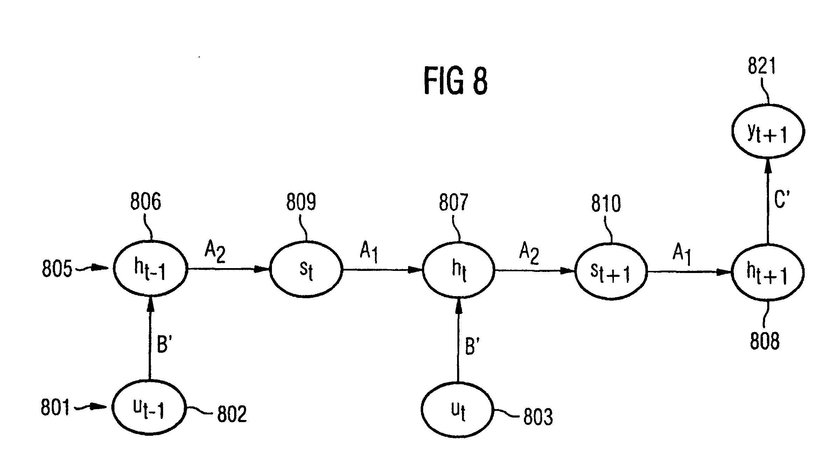

Zum einfacheren Verständnis der der Anordnung zugrunde liegenden Prinzipien ist in **Fig.8** das bekannte TDRNN als ein über eine endliche Anzahl von Zeitpunkten (t-1, t, t+1) entfaltetes neuronales Netz 800 dargestellt.

Das in **Fig.8** dargestellte neuronale Netz 800 weist eine Eingangsschicht 801 mit zwei Teileingangsschichten 802 und 803 auf, die jeweils eine vorgebbare Anzahl Eingangs-Rechenelemente enthalten, denen Eingangsgrößen $u_t$ zu einem vorgebbaren Zeitpunkt t, d.h. im weiteren beschriebene Zeitreihenwerte, anlegbar sind.

Eingangs-Rechenelemente, d.h. Eingangsneuronen, sind über variable Verbindungen mit Neuronen einer vorgebbaren Anzahl versteckter Schichten 805 verbunden.

Dabei sind Neuronen einer ersten versteckten Schicht 806 mit Neuronen der ersten Teileingangsschicht 802 verbunden. Ferner sind Neuronen einer zweiten versteckten Schicht 807 mit Neuronen der zweiten Eingangsschicht 803 verbunden.

Die Verbindungen zwischen der ersten Teileingangsschicht 802 und der ersten versteckten Schicht 806, der zweiten Teileingangsschicht 803 und der zweiten versteckten Schicht 807 sind jeweils gleich. Die Gewichte aller Verbindungen sind jeweils in einer ersten Verbindungsmatrix B' enthalten.

Neuronen einer vierten versteckten Schicht 809 sind mit ihren Eingängen mit Ausgängen von Neuronen der ersten versteckten Schicht 802 gemäß einer durch eine zweite Verbindungsmatrix $A_2$ gegebene Struktur verbunden. Ferner sind Ausgänge der Neuronen der vierten versteckten Schicht 809 mit Eingängen von Neuronen der zweiten versteckten Schicht 807 gemäß einer durch eine dritte Verbindungsmatrix $A_1$ gegebene Struktur verbunden.

Ferner sind Neuronen einer fünften versteckten Schicht 810 mit ihren Eingängen gemäß einer durch die dritte Verbindungsmatrix $A_2$ gegebenen Struktur mit Ausgängen von Neuronen der zweiten versteckten Schicht 807 verbunden. Ausgänge der Neuronen der fünften versteckten Schicht 810 sind mit Eingängen von Neuronen einer dritten versteckten Schicht 808 gemäß einer durch die dritte Verbindungsmatrix $A_1$ gegebenen Struktur verbunden.

Die Angaben in den Indizes in den jeweiligen Schichten geben jeweils den Zeitpunkt t, t+1, t-1, an, auf die sich jeweils die an den Ausgängen der jeweiligen Schicht abgreifbaren ($y_{t+1}$) bzw. zuführbaren ($u_{t-1}$, $u_t$) Signale beziehen.

Eine Ausgangsschicht 520 weist eine Teilausgangsschicht 521 auf. Neuronen der ersten Teilausgangsschicht 521 sind gemäß einer durch eine Ausgangs-Verbindungsmatrix C' gegebenen Struktur mit Neuronen der dritten versteckten Schicht 508 verbunden. An den Neuronen der ersten Teilausgangsschicht 521 ist die Ausgangsgröße für einen Zeitpunkt t+1 abgreifbar ($y_{t+1}$).

Ausgehend von diesem Prinzip der sogenannten geteilten Gewichtswerte (Shared Weights), d.h. dem Grundsatz, daß äquivalente Verbindungsmatrizen in einem neuronalen Netz zu einem jeweiligen Zeitpunkt die gleichen Werte aufweisen, wird im weiteren die in **Fig.1** dargestellte Anordnung gebildet erläutert.

Die im weiteren beschriebenen Skizzen sind jeweils so zu verstehen, daß jede Schicht bzw. jede Teilschicht eine vorgebbare Anzahl von Neuronen, d.h. Rechenelementen, aufweist.

Die jeweiligen Verbindungsmatrizen sind beliebiger Dimension und enthalten jeweils zu den entsprechenden Verbindungen zwischen den Neuronen der jeweiligen Schichten die Gewichtswerte.

Die in **Fig.1** dargestellte Anordnung weist eine Eingangsschicht 100 mit zwei Teileingangsschichten, einer ersten Teileingangsschicht 101 und einer zweiten Teileingangsschicht 102 auf, wobei jeder Teileingangsschicht 101, 102, jeweils Zeitreihenwerte $x_t$, $x_{t+1}$ zu jeweils einem Zeitpunkt t bzw. t+1 zuführbar sind.

Weitere Einflußgrößen werden durch eine weitere Eingangsschicht 120 mit einer weiteren Teileingangsschicht 121, an deren Neuronen die weiteren Einflußgrößen in Form einer weiteren Eingangsgröße $e_t$ zu einem Zeitpunkt t zuführbar sind, berücksichtigt.

Die Teileingangsschichten 101, 102 der Eingangsschicht 100 sind jeweils über Verbindungen gemäß einer ersten Verbindungsmatrix A mit Neuronen einer ersten versteckten Schicht 110 mit jeweils zwei Teilschichten, einer ersten Teilschicht 111 und einer zweiten Teilschicht 112 der ersten versteckten Schicht 110 verbunden. Die weitere Teileingangsschicht 121 der weiteren Eingangsschicht 120 ist über eine Verbindung gemäß einer fünften Verbindungsmatrix E mit Neuronen einer zweiten versteckten Schicht 130 mit einer Teilschicht 131 der zweiten versteckten Schicht 130 verbunden.

Die Neuronen der ersten Teilschicht 111 der ersten verdeckten Schicht 110 sind gemäß einer dritten Verbindungsmatrix C mit den Neuronen der Teilschicht 131 der zweiten verdeckten Schicht verbunden. Die Neuronen der Teilschicht 131 der zweiten versteckten Schicht 130 sind gemäß einer vierten Verbindungsmatrix D mit den Neuronen der zweiten Teilschicht 112 der ersten versteckten Schicht 110 verbunden.

Die Neuronen der ersten Teilschicht 111 der ersten versteckten Schicht 110 sind gemäß einer durch eine zweite Verbindungsmatrix B gegebenen Struktur mit Neuronen einer ersten Teilausgangsschicht 141 einer Ausgangsschicht 140 verbunden. Die Neuronen der zweiten Teilschicht 112 der ersten versteckten Schicht 110 sind gemäß der durch die zweite Verbindungsmatrix B gegebenen Struktur mit Neuronen einer zweiten Teilausgangsschicht 142 der Ausgangsschicht 140 verbunden.

Ein in den Teilschichten 111, 112 der ersten versteckten Schicht 110 gebildeter "innerer" Systemzustand repräsentiert jeweils einen "inneren" Systemzustand $s_t$ und $s_{t+1}$ zweier aufeinanderfolgender Zeitpunkte t und t+1. Um auch den zeitlichen Fluß der Systemzustände $s_t$ in dem "inneren" Systemzustand berücksichtigen zu können, sind die zwei Teilschichten 111, 112 der ersten versteckten Schicht 110 durch die Teilschicht 131 der zweiten versteckten Schicht 130 verbunden.

Die Zeitreihenwerte $x_t$, $x_{t+1}$, welche in einem Eingangsraum hochdimensional sind, werden jeweils auf den "inneren" Systemzustand $s_t$ und $s_{t+1}$ transformiert (Kompression), wobei die Dimension des "inneren" Systemzustands $s_t$ und $s_{t+1}$ klein im Vergleich zu dem hochdimensionalen Eingangsraum ist.

An einem Ausgang 145 der ersten Teilausgangsschicht 141 der ersten Ausgangsschicht 140 und an einem Ausgang 145 der zweiten Teilausgangsschicht 142 der ersten Ausgangsschicht sind jeweils die nach der Kompression auf den inneren Systemzustand $s_t$ und $s_{t+1}$ wieder auf die Dimension des Eingangsraums rücktransformierten (Dekompression) Zeitreihenwerte $x_t$, $x_{t+1}$ zu jeweils dem Zeitpunkt t bzw. t+1 abgreifbar.

Zur besseren Veranschaulichung der durch die Anordnung erreichten Transformationen ist in **Fig.7** ein Ablauf von Verfahrensschritten 700, im Rahmen derer die Transformationen durchgeführt werden, dargestellt.

In einem ersten Schritt 710 werden die Zeitreihenwerte $x_t$ in dem ersten Raum X und die weitere Eingangsgröße $e_t$ in einem zweiten Raum Y gemessen und jeweils zeitlich aufeinanderfolgend gruppiert (Input/Vorverarbeitung).

In einem zweiten Schritt 720 werden die Zeitreihenwerte $x_t$ in dem ersten Raum X unter Verwendung der ersten Abbildungsfunktion g(.) in einen inneren Zustandsraum S transformiert (Kompression).

In einem dritten Schritt 730 wird Abbildung f eines Wertes $s_t$ in dem inneren Raum S zu einem Zeitpunkt t, auf einen Wert $s_{t+1}$ zu einem folgenden Zeitpunkt t+1 gebildet (Forecast, Vorhersage). Diese Abbildung wird derart gebildet, daß die Einflußgrößen $e_t$ berücksichtigt werden.

In einem vierten Schritt 740 wird die abgebildete Größe $s_{t+1}$ in dem inneren Raum S unter Verwendung einer Rücktransformation gemäß der zweiten Abbildungsfunktion h(.) zu dem Zeitreihenwert $x_{t+1}$ des zeitlich folgenden Zeitpunkts t+1 rücktransformiert (Dekompression).

In einem fünften Schritt 750 wird unter Verwendung des Zeitreihenwertes $x_{t+1}$ die Dynamik überwacht und gesteuert Output/Nachverarbeitung).

Anschaulich bedeutet dies, daß die Abbildung aufgeteilt wird in mehrere Abbildungen gemäß folgender Vorschrift:

$$x_{t+1} = h \circ f \circ g(x_t). \tag{7}$$

Die Ermittlung der Dynamik kann nun in zwei Phasen formuliert werden.

1. Es wird eine Abbildungsvorschrift g: $X \to S$ gesucht, mit der der erste Raum X in einen inneren Raum S abgebildet wird derart, daß die Dimension des inneren Raums klein im Vergleich zu der Dimension des ersten Raums S ist und daß bei der Dynamik des Prozesses in dem zweiten Raum S die Einflußgrößen in dem zweiten Raum Y berücksichtigt werden.

2. Es wird eine Rücktransformationsvorschrift h: $S \to X$ aus dem zweiten Raum S in den ersten Raum X gesucht, die folgender Vorschrift genügt:

$$\left\| x_t - h \circ g(x_t) \right\| \to \min_{g,h}. \tag{8}$$

Nachdem die entsprechenden Transformationen unter Verwendung der oben beschriebenen Anordnung in Form der Verbindungsmatrizen gelernt wurden, wird die dynamische Abbildung f in dem zweiten Raum S ermittelt derart, daß gilt:

$$f: S \to S, \tag{9}$$

$$\left\| x_{t+1} - h \circ f \circ g(x_t) \right\| \to \min_{f}. \tag{10}$$

**Training der Anordnung gemäß dem ersten Ausführungsbeispiel**

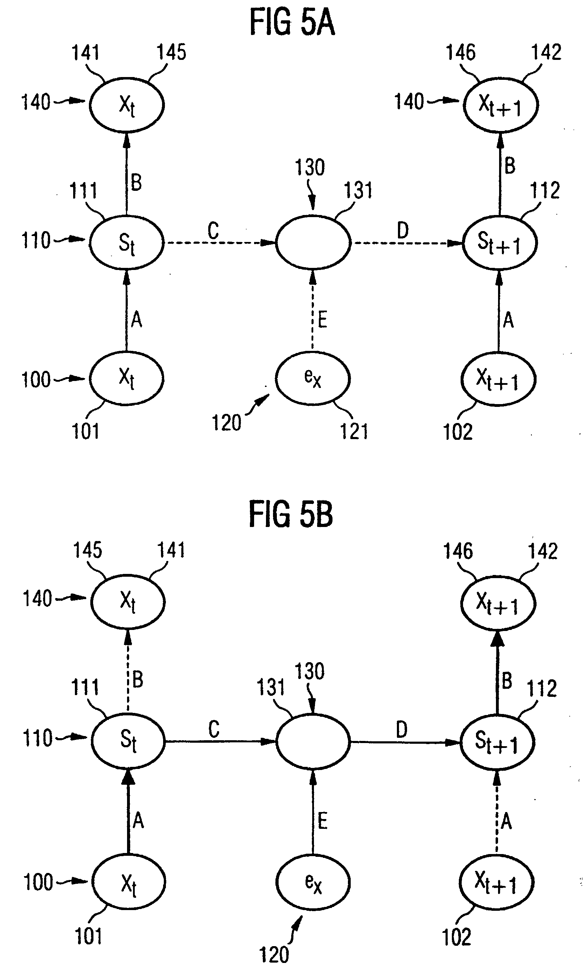

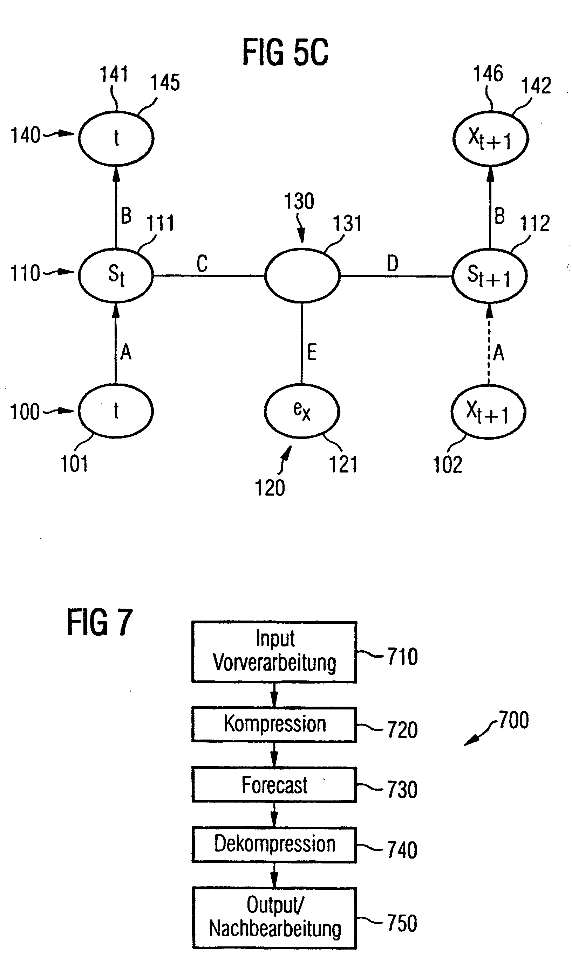

Ein Training der Anordnung (vgl. **Fig.5a-c**) wird im Rahmen eines Trainingsverfahrens, welches zwei Schritte (vgl. **Fig.5a,b**) und einen Zusatzschritt (vgl. **Fig.5c**) aufweist, durchgeführt. Als Trainingsverfahren wird jeweils das Backpropagation-Verfahren eingesetzt. Ein erster, zweiter und dritter Trainingsdatensatz für entsprechend den ersten, zweiten und dritten Trainingsschritt werden jeweils auf nachfolgend beschriebene Weise aus dem chemischen Reaktor 400 gewonnen.

Es werden mit dem Meßgerät 407 zu in dem chemischen Reaktor 400 gemessenen Einflußgrößen $e_t$ Konzentrationen gemessen und dem Rechner 409 zugeführt, dort digitalisiert und als Zeitreihenwerte $x_t$ in einem Speicher gemeinsam mit den entsprechenden Einflußgrößen $e_t$, die zu den gemessenen Größen korrespondieren, zeitlich aufeinanderfolgend gruppiert.

Im Rahmen des Trainings und der Trainingsschritte werden Verbindungen zwischen Neuronen eingefroren und/oder gelöst.

Die entsprechenden Anordnungen sind in den **Fig.5a-c** dargestellt. Dabei bedeutet eine eingefrorene Neuronenverbindung, daß Gewichte dieser Neuronenverbindung während des entsprechenden Trainingsschrittes unverändert bleiben. Eine eingefrorene Verbindungen ist in den **Fig.5a-c** durch eine dick gezeichnete Pfeilverbindung hervorgehoben dargestellt.

Eine gelöste Neuronenverbindung bedeutet, daß in dem entsprechenden Trainingsschritt keine Signale zwischen den verbundenen Neuronen übertragen werden. Dies kann dadurch realisiert werden, daß die Neuronenverbindung in dem entsprechenden Trainingsschritt unterbrochen wird oder daß Gewichte der gelösten Verbindung in dem entsprechenden Trainingsschritt auf Null gesetzt werden. Eine gelöste Neuronenverbindung ist in den **Fig.5a-c** durch eine gestrichelt gezeichnete Pfeilverbindung hervorgehoben dargestellt.

**Erster Trainingsschritt**

In **Fig.5a** ist die Anordnung gemäß **Fig.1,** wie sie in dem ersten Trainingsschritt trainiert wird, dargestellt. In dem ersten Trainingsschritt wird die Kompression/Dekompression trainiert.

Bei dem ersten Trainingsschritt werden die Neuronenverbindungen von der ersten Teilschicht 111 der ersten versteckten Schicht 110, von der zweiten Teilschicht 112 der ersten versteckten Schicht 110 und der weiteren Teileingangsschicht 121 der weiteren Eingangsschicht 120 jeweils zu der Teilschicht 131 der zweiten versteckten Schicht 130 gelöst. Unter Verwendung des ersten Trainingsdatensatzes werden die bestehenden Verbindungen mit dem Backpropagation-Verfahren trainiert.

**Zweiter Trainingsschritt**

In **Fig.5b** ist die Anordnung gemäß **Fig.1,** wie sie in dem zweiten Trainingsschritt trainiert wird, dargestellt. In dem zweiten Trainingsschritt wird die Vorhersage (Forecast) trainiert.

Bei dem zweiten Trainingsschritt werden die Neuronenverbindung von der ersten Teilschicht 111 der ersten versteckten Schicht 110 zu der ersten Teilausgangsschicht 141 der Ausgangsschicht 140 und die Neuronenverbindung von der zweiten Teileingangsschicht 102 der ersten Eingangsschicht 100 zu der zweiten Teilschicht 112 der ersten versteckten Schicht 110 gelöst. Die Neuronenverbindung von der ersten Teileingangsschicht 101 der ersten Eingangsschicht 100 zu der ersten Teilschicht 111 der ersten versteckten Schicht 110 und die Neuronenverbindung von der zweiten Teilschicht 112 der ersten versteckten Schicht 110 zu der zweiten Teilausgangsschicht 142 der Ausgangsschicht 140 werden eingefroren. Unter Verwendung des zweiten Trainingsdatensatzes werden die bestehenden Verbindungen mit dem Backpropagation-Verfahren trainiert.

**Zusatz-Trainingsschritt**

In **Fig.5c** ist die Anordnung gemäß **Fig.1,** wie sie in dem Zusatz-Trainingsschritt trainiert wird, dargestellt. In dem Zusatz-Trainingsschritt wird die Kompression/Dekompression zusammen mit der Vorhersage trainiert.

Bei dem Zusatz-Trainingsschritt wird die Neuronenverbindungen von der zweiten Teileingangsschicht 102 der ersten Eingangsschicht 100 zu der zweiten Teilschicht 112 der ersten versteckten Schicht 110 gelöst. Unter Verwendung des dritten Trainingsdatensatzes werden die bestehenden Verbindungen mit dem Backpropagation-Verfahren trainiert.

Die gemäß dem oben beschriebenen Trainingsverfahren trainierte Anordnung aus **Fig.1** wird zur Ermittlung chemischer Größen im chemischen Reaktor 400 eingesetzt derart, daß für eine Eingangsgröße $x_t$ zu einem Zeitpunkt t eine Prognosegröße $x_{t+1}$ in einer Anwendungsphase von der Anordnung ermittelt wird, die anschließend als eine Steuergröße nach einer eventuellen Aufbereitung der ermittelten Größen als Steuergröße 420, 421 dem Steuerungsmittel 405 zur Steuerung des Rührers 402 oder auch einer Zuflußsteuereinrichtung 430 zur Steuerung des Zuflusses weiterer chemischer Substanzen 403 in dem chemischen Reaktor 400 verwendet werden (vgl. **Fig.4**).

**2. Ausführungsbeispiel: Asset Allocation**

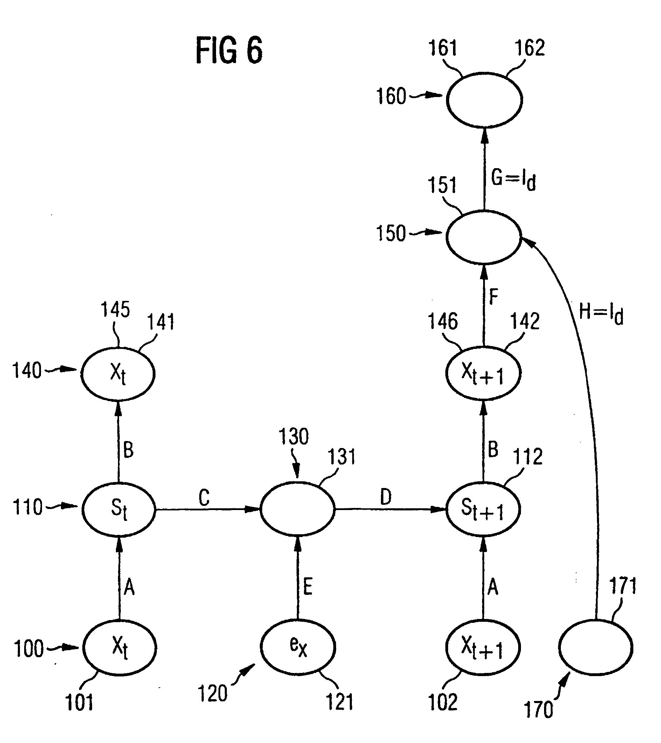

In **Fig.6** ist eine Anordnung zu einer Ermittlung einer Dynamik von Aktienkursen eines vorgegebenen Aktienportfolios dargestellt, welche Anordnung eine Erweiterung der im Rahmen des ersten Ausführungsbeispiels beschrieben Anordnung ist. Unter Verwendung der ermittelten Dynamik werden die Aktienkurse der vorgegebenen Aktien zu einem Zeitpunkt (t+1) vorhergesagt.

Darüber hinaus wird mit der Anordnung gemäß **Fig.6** unter Verwendung der ermittelten Dynamik der Aktienkurse und der vorhergesagten Aktienkurse eine hinsichtlich eines Ertrags und eines kausalen Risikos optimale Gewichtung einer einzelnen Aktie zu einem Zeitpunkt (t+1) ermittelt. Eine solche Ermittlung wird als "Asset Allocation" bezeichnet.

Eine Eingangsgröße $x_t$ der Anordnung, welche eine hochdimensionale Eingangsgröße ist und welche die Aktienkurse der vorgegebenen Aktien zu einem Zeitpunkt t beschreibt, setzt sich in diesem Fall zusammen aus den Aktienkursen von 100 Aktien, welche in einem Index DAX und einem Index MDAX einer Deutschen Börse AG enthalten sind.

Eine weitere Eingangsgröße $e_t$ der Anordnung, welche Einflußgrößen auf die Aktienkurse der vorgegebenen Aktien berücksichtigt, setzt sich zusammen aus einer Angabe über Währungskurse und Zinsstrukturen von in- und ausländischen Kapitalund Geldmärkten.

Ziel der im weiteren beschriebenen Modellierung der Aktienkurse ist die Bestimmung der dynamischen Entwicklung der Aktienkurse, um daraus eine hinsichtlich eines Ertrags und eines kausalen Risikos optimale Gewichtung $a_i$ einer einzelnen Aktie i der 100 vorgegebenen Aktien zu einem Zeitpunkt (t+1) zu ermitteln. Als Vergleichs-Portfolio, im weiteren auch als Benchmark-Asset bezeichnet, dient die gewichtete Zusammensetzung der 100 Aktien in den Indizes DAX und MDAX.

Die Bestimmung der Dynamik der Aktienkurse und die Asset Allocation erfolgt unter Verwendung der im weiteren beschriebenen und in der **Fig.6** dargestellten Anordnung.

Da die Anordnung gemäß **Fig.6** eine Erweiterung der Anordnung gemäß **Fig.1** ist, gelten die im Rahmen des ersten Ausführungsbeispiels gemachten Ausführungen hinsichtlich der beschriebenen Anordnung und des der Anordnung zugrunde liegenden Prinzips, des beschriebenen Verfahrens im Rahmen der Anwendung der Anordnung und des Trainingsverfahrens der Anordnung entsprechend für die erweiterte Anordnung gemäß **Fig.6.**

Dementsprechend sind Komponenten aus den **Fig.1** und **Fig.6** bei gleicher Ausgestaltung mit gleichen Bezugszeichen versehen.

Zusätzlich weist die Anordnung zur Asset Allocation eine Teilschicht 151 einer dritten versteckten Schicht 150 auf. Neuronen der Teilschicht 151 der dritten versteckten Schicht 150 sind mit den Neuronen der zweiten Teilausgangsschicht 142 der Ausgangsschicht 140 gemäß einer Struktur, die durch eine sechste Verbindungsmatrix F gegeben ist, verbunden.

Ferner weist die Anordnung zur Asset Allocation eine Teileingangsschicht 171 einer zusätzlichen Eingangsschicht 170 auf. Neuronen der Teileingangsschicht 171 der zusätzlichen Eingangsschicht 170 sind gemäß einer Struktur, die durch eine siebte Verbindungsmatrix H gegeben ist, mit den Neuronen der Teilschicht 151 der dritten versteckten Schicht 150 verbunden.

Ferner weist die Anordnung zur Asset Allocation zusätzlich eine Teilausgangsschicht 161 einer zusätzlichen Ausgangsschicht 160 auf. Die Neuronen der Teilschicht 151 der dritten versteckten Schicht 150 sind mit Neuronen der Teilausgangsschicht 161 der zusätzlichen Ausgangsschicht 160 gemäß einer Struktur, die durch eine achte Verbindungsmatrix G gegeben ist, verbunden.

An einem Ausgang 162 der Teilausgangsschicht 161 der zusätzlichen Ausgangsschicht 160 sind Zeitreihenwerte $a_i$ zu dem Zeitpunkt t+1 abgreifbar.

Unter Verwendung der zusätzlichen Elemente der Anordnung zur Asset Allocation wird eine vorgebbare Transformation mit folgender Vorschrift realisiert:

$$a_i(x_1, \ldots, x_m, w_1, \ldots, w_m) = \frac{\mu_i * \exp(w_i * x_i)}{\sum_{k=1}^{m} \mu_k * \exp(w_k * x_k)}$$

mit:

| | |
|---|---|
| i,k | : Indizes |
| m | : Anzahl der vorgegeben Aktien, m = 100 |

$a_i$ : Gewichtung einer Aktie i zu einem Zeitpunkt (t+1)

$\mu_i$ : vorgegebene Gewichtung einer Aktie i in einem Vergleichs-Portfolio (Benchmark-Asset)

$w_1,...,w_m$ : Parameter bzw. Gewichte

$x_1,...,x_m$ : prognostizierte Aktienkurse der vorgegebenen Aktien zu dem Zeitpunkt (t+1)

exp(...) : Exponentialfunktion

Bei der Realisierung der vorgebbaren Transformation ist die sechste Verbindungsmatrix F eine Diagonalmatrix, deren Diagonalwerte die Parameter $w_i$ sind. Die siebte Verbindungsmatrix H und die achte Verbindungsmatrix G ist jeweils eine Identitätsmatrix Id.

Bei der Realisierung der vorgebbaren Transformation wird in der Teileingangsschicht 171 der zusätzlichen Eingangsschicht 170 eine Abbildung o gemäß $o_i = \ln(\mu_i)$ durchgeführt.

In der Teilschicht 151 der dritten versteckten Schicht 150 wird eine Abbildung p gemäß

$$p_i = \exp(q) = \exp(o_i \cdot x_i \cdot w_i)$$

und eine Normierung r, eine "softmax Normierung", gemäß

$$= \frac{\exp(\ln(\mu_i) \cdot w_i \cdot x_i)}{\sum_{k=1}^{m} \exp(\ln(\mu_i) \cdot w_k \cdot x_k)}$$

durchgeführt.

In der Teilausgangsschicht 161 der zusätzlichen Ausgangsschicht 160 erfolgt eine Überprüfung einer vorgebbaren Nebenbedingung gemäß

$$a_i \in [\mu_i - \beta\Delta_i, \; \mu_i + \beta\Delta_i]$$

mit:

$\beta$ : Risikoparamter, $\beta \in [0,1]$

$\Delta_i$ : vorgegeben Grenze für eine Aktie i für eine Abweichung von einer vorgegebenen Gewichtung in einem Vergleichs-Portfolio (Benchmark-Asset).

Die durch die Anordnung gemäß **Fig.6** erreichten Transformationen umfassen die in **Fig.7** dargestellten und im Rahmen des ersten Ausführungsbeispiels beschrieben Verfahrensschritte.

In dem fünften Schritt 750 wird im Rahmen des zweiten Ausführungsbeispiels zusätzlich unter Verwendung der vorhergesagten Aktienkurse x(t+1) zu einem Zeitpunkt (t+1) die hinsichtlich eines Ertrags und eines kausalen Risikos optimale Gewichtung $a_i$ der einzelnen Aktien i zu einem Zeitpunkt (t+1) ermittelt.

**Training der Anordnung zur Asset Allocation**

Bei einem Training der Anordnung zur Asset Allocation werden die im Rahmen des ersten Ausführungsbeispiels beschriebenen Trainingsschritte, erster Trainingsschritt, zweiter Trainingsschritt und Zusatz-Trainingsschritt, durchgeführt. Zusätzlich wird bei dem Training für die Anordnung zur Asset Allocation im Anschluß an den Zusatz-Trainingsschritt ein weiterer Trainingsschritt, ein Allocation-Trainingsschritt, durchgeführt.

Bei dem Allocation-Trainingsschritt werden die Gewichte $w_i$ der sechsten Verbindungsmatrix F verändert bzw. angepaßt, wobei die Gewichte der übrigen Verbindungsmatrizen durch Einfrieren der entsprechenden Neuronenverbindungen unverändert bleiben.

Ein vierter Trainingsdatensatz für den Allovation-Trainingsschritt wird derart ermittelt, daß Zeitreihenwerte $x_t$ aus einem zu einem aktuellen Zeitpunkt t beendeten Zeitintervall T gemeinsam mit den entsprechenden Einflußgrößen $e_t$ aus dem Zeitintervall T, die zu den gemessenen Größen korrespondieren, gruppiert werden. Unter Verwendung des vierten Trainingsdatensatzes werden die Gewichte $w_i$ mit dem Backpropagation-Verfahren trainiert.

Das Training der Gewichte $w_i$ erfolgt durch Maximierung folgender Target-Funktion TF:

$$\frac{1}{T} \sum_{t=1}^{T} \sum_{i=1}^{m} x_i * \frac{\mu_i * \exp(w_i * x_i)}{\sum_{k=1}^{m} \mu_k * \exp(w_k * x_k)} \to \max.$$

Mit der derart bestimmten Target-Funktion TF wird nicht nur eine Maximierung eines Ertrags, sondern auch eine Minimierung eines kausalen Risikos erreicht.

Die gemäß dem oben beschriebenen Trainingsverfahren trainierte Anordnung aus **Fig.6** wird zur Ermittlung einer Asset Allocation von Aktien eines Aktien-Portfolios eingesetzt derart, daß für eine Eingangsgröße $x_t$ zu einem Zeitpunkt t eine Prognosegröße x(t+1) zu einem Zeitpunkt (t+1) in einer Anwendungsphase von der Anordnung ermittelt wird und unter Verwendung der Prognosegröße x(t+1) eine hinsichtlich eines Ertrags und eines kausalen Risikos optimale Gewichtung $a_i$ einer einzelnen Aktie i des Aktien-Portfolios ermittelt. Entsprechend der ermittelten optimalen Gewichtungen $a_i$ der einzelnen Aktien i des Aktien-Portfolios wird unter Verwendung eines rechnergestützten Kapitalmarkt-Handelssystems das Aktien-Portfolio rechnergestützt verändert. Dabei werden den Gewichtungen $a_i$ der einzelnen Aktien i des Aktien-Portfolios entsprechende Signale an das Kapitalmark-Handelssystem übertragen. Das Kapitalmarkt-handelssystem ermittelt entsprechend den Gewichtungen $a_i$ notwendige Verkäufe und/oder Zukäufe von den einzelnen Aktien, welche notwendigen Verkäufe und/oder Zukäufe rechnergestützt durch das Kapitalmarkt-Handelssystem durchgeführt werden.

Im folgenden werden Prinzipien der durch die zusätzlichen Elemente der Anordnung gemäß dem zweiten Ausführungsbeispiel realisierten Transformation angegeben.

Die Transformation mit folgenden Vorschrift:

$$a_i(x_1, \ldots, x_m, w_1, \ldots, w_m) = \frac{\mu_i * \exp(w_i * x_i)}{\sum_{k=1}^{m} \mu_k * \exp(w_k * x_k)}$$

mit:

| | |
|---|---|
| i,k | : Indizes |
| m | : Anzahl der vorgegeben Aktien, m = 100 |
| $a_i$ | : Gewichtung einer Aktie i zu einem Zeitpunkt (t+1) |
| $\mu_i$ | : vorgegebene Gewichtung einer Aktie i in einem Vergleichs-Portfolios (Benchmark-Asset) |
| $w_1, \ldots, w_m$ | : Parameter bzw. Gewichte |
| $x_1, \ldots, x_m$ | : prognostizierte Aktienkurse der vorgegebenen Aktien zu dem Zeitpunkt (t+1) |
| exp(...) | : Exponentialfunktion |

wurde derart bestimmt, daß folgende Prinzipien erfüllt werden:

1. $a_i = a_i(x_1, \ldots, x_m)$,
d.h. die Gewichtung der Aktie i ist von einer hervorgesagten Aktienkursentwicklung der Aktie abhängig;

2. $a_i \geq 0$;

3. $\frac{\partial a_i}{\partial x} \geq 0$, bei konstantem Risiko;

4.

$$\sum_{i=1}^{m} a_i = 1;$$

5.

$$a_i \in [\mu_i - \Delta_i, \mu_i + \Delta_i], \text{ mit } \sum_{i=1}^{m} \mu_i = 1.$$

Im weiteren ist eine mögliche Realisierung des oben beschriebenen zweiten Ausführungsbeispiels angegeben für das Programm SENN, Version 2.3. Die Realisierung umfaßt drei Abschnitte, die jeweils einen Programmcode enthalten, die zur Verarbeitung in SENN, Version 2.3 erforderlich sind.

## 1. Parameter-Datei:

```
BpNet {
  Globals {
    WtPenalty {
     sel NoPenalty
      Weigend {
        Lambda { 0.000000 }
        AutoAdapt { T }
        w0 { 1.000000 }
        DeltaLambda { 0.000001 }
        ReducFac { 0.900000 }
        Gamma { 0.900000 }
        DesiredError { 0.000000 }
      }
      WtDecay {
        Lambda { 0.001000 }
        AutoAdapt { F }
        AdaptTime { 10 }
        EpsObj { 0.001000 }
        ObjSet { Training }
        EpsilonFac { 1.000000 }
      }
      ExtWtDecay {
        Lambda { 0.001000 }
        AutoAdapt { F }
        AdaptTime { 10 }
        EpsObj { 0.001000 }
        ObjSet { Training }
        EpsilonFac { 1.000000 }
      }
      Finnoff {
        AutoAdapt { T }
        Lambda { 0.000000 }
        DeltaLambda { 0.000001 }
        ReducFac { 0.900000 }
        Gamma { 0.900000 }
        DesiredError { 0.000000 }
      }
    }
    ErrorFunc {
     sel LnCosh
      |x| {
        parameter { 0.050000 }
      }
      LnCosh {
        parameter { 3.000000 }
      }
    }
    AnySave {
      file_name { f.Globals.dat }
    }
    AnyLoad {
```

```
            file_name { f.Globals.dat }
          }
       ASCII { F }
     }
  LearnCtrl {
   sel Stochastic
     Stochastic {
       PatternSelection {
        sel Permute
          SubSample {
            Percent { 0.500000 }
          }
          ExpRandom {
            Lambda { 2.000000 }
          }
        }
       WtPruneCtrl {
         PruneSchedule {
          sel FixSchedule
            FixSchedule {
              Limit_0 { 10 }
              Limit_1 { 10 }
              Limit_2 { 10 }
              Limit_3 { 10 }
              RepeatLast { T }
            }
            DynSchedule {
              MaxLength { 4 }
              MinimumRuns { 0 }
              Training { F }
              Validation { T }
              Generalization { F }
            }
            DivSchedule {
              Divergence { 0.100000 }
              MinEpochs { 5 }
            }
          }
          PruneAlg {
           sel FixPrune
            FixPrune {
              Perc_0 { 0.100000 }
              Perc_1 { 0.100000 }
              Perc_2 { 0.100000 }
              Perc_3 { 0.100000 }
            }
            EpsiPrune {
              DeltaEps { 0.050000 }
              StartEps { 0.050000 }
              MaxEps { 1.000000 }
              ReuseEps { F }
            }
          }
          Tracer {
            Active { F }
            Set { Validation }
            File { trace }
          }
          Active { F }
```

```
      Randomize { 0.000000 }
      PruningSet { Train.+Valid. }
      Method { S-Pruning }
    }
StopControl {
  EpochLimit {
    Active { F }
    MaxEpoch { 60 }
  }
  MovingExpAverage {
    Active { F }
    MaxLength { 4 }
    Training { F }
    Validation { T }
    Generalization { F }
    Decay { 0.900000 }
  }
  CheckObjectiveFct {
    Active { F }
    MaxLength { 4 }
    Training { F }
    Validation { T }
    Generalization { F }
  }
  CheckDelta {
    Active { F }
    Divergence { 0.100000 }
  }
}
EtaCtrl {
  Mode {
   sel EtaSchedule
    EtaSchedule {
      SwitchTime { 10 }
      ReductFactor { 0.950000 }
    }
    FuzzCtrl {
      MaxDeltaObj { 0.300000 }
      MaxDelta2Obj { 0.300000 }
      MaxEtaChange { 0.020000 }
      MinEta { 0.001000 }
      MaxEta { 0.100000 }
      Smoother { 1.000000 }
    }
  }
  Active { F }
}
LearnAlgo {
 sel OnlineBackProp
  VarioEta {
    MinCalls { 50 }
  }
  MomentumBackProp {
    Alpha { 0.050000 }
  }
  Quickprop {
    Decay { 0.050000 }
    Mu { 2.000000 }
  }
```

```
      }
    AnySave {
      file_name { f.Stochastic.dat }
    }
    AnyLoad {
      file_name { f.Stochastic.dat }
    }
    BatchSize { 1 }
    Eta { 0.001000 }
    DerivEps { 0.000000 }
  }
  TrueBatch {
    PatternSelection {
     sel Sequential
      SubSample {
        Percent { 0.500000 }
      }
      ExpRandom {
        Lambda { 2.000000 }
      }
    }
    WtPruneCtrl {
      Tracer {
        Active { F }
        Set { Validation }
        File { trace }
      }
      Active { F }
      Randomize { 0.000000 }
      PruningSet { Train.+Valid. }
      Method { S-Pruning }
    }
    EtaCtrl {
      Active { F }
    }
    LearnAlgo {
     sel VarioEta
      VarioEta {
        MinCalls { 200 }
      }
      MomentumBackProp {
        Alpha { 0.050000 }
      }
      Quickprop {
        Decay { 0.050000 }
        Mu { 2.000000 }
      }
    }
    AnySave {
      file_name { f.TrueBatch.dat }
    }
    AnyLoad {
      file_name { f.TrueBatch.dat }
    }
    Eta { 0.050000 }
    DerivEps { 0.000000 }
  }
  LineSearch {
    PatternSelection {
```

```
    sel Sequential
     SubSample {
       Percent { 0.500000 }
     }
     ExpRandom {
       Lambda { 2.000000 }
     }
   }
 WtPruneCtrl {
    Tracer {
       Active { F }
       Set { Validation }
       File { trace }
    }
    Active { F }
    Randomize { 0.000000 }
    PruningSet { Train.+Valid. }
    Method { S-Pruning }
 }
 LearnAlgo {
   sel VarioEta
    VarioEta {
       MinCalls { 200 }
     }
    MomentumBackProp {
       Alpha { 0.050000 }
     }
    Quickprop {
       Decay { 0.050000 }
       Mu { 2.000000 }
     }
    Low-Memory-BFGS {
       Limit { 2 }
     }
 }
 AnySave {
    file_name { f.LineSearch.dat }
 }
 AnyLoad {
    file_name { f.LineSearch.dat }
 }
 EtaNull { 1.000000 }
 MaxSteps { 10 }
 LS_Precision { 0.500000 }
 TrustRegion { T }
 DerivEps { 0.000000 }
 BatchSize { 2147483647 }
}
GeneticWeightSelect {
  PatternSelection {
   sel Sequential
    SubSample {
       Percent { 0.500000 }
     }
    ExpRandom {
       Lambda { 2.000000 }
     }
  }
  LearnAlgo {
```

```
  sel VarioEta
   VarioEta {
     MinCalls { 200 }
   }
   MomentumBackProp {
     Alpha { 0.050000 }
   }
}
ObjFctTracer {
  Active { F }
  File { objFunc }
}
SearchControl {
  SearchStrategy {
   sel HillClimberControl
    HillClimberControl {
      %InitialAlive { 0.950000 }
      InheritWeights { T }
      Beta { 0.100000 }
      MutationType { MacroMutation }
      MaxTrials { 50 }
    }
    PBILControl {
      %InitialAlive { 0.950000 }
      InheritWeights { T }
      Beta { 0.100000 }
      Alpha { 0.100000 }
      PopulationSize { 40 }
    }
    PopulationControl {
      pCrossover { 1.000000 }
      CrossoverType { SimpleCrossover }
      Scaling { T }
      ScalingFactor { 2.000000 }
      Sharing { T }
      SharingFactor { 0.050000 }
      PopulationSize { 50 }
      min.%InitialAlive { 0.010000 }
      max.%InitialAlive { 0.100000 }
    }
  }
  pMutation { 0.000000 }
}
ObjectiveFunctionWeights {
  %Alive { 0.600000 }
  E(TS) { 0.200000 }
  Improvement(TS) { 0.000000 }
  E(VS) { 1.000000 }
  Improvement(VS) { 0.000000 }
  (E(TS)-E(VS))/max(E(TS),E(VS)) { 0.000000 }
  LipComplexity { 0.000000 }
  OptComplexity { 2.000000 }
  testVal(dead)-testVal(alive) { 0.000000 }
}
AnySave {
  file_name { f.GeneticWeightSelect.dat }
}
AnyLoad {
  file_name { f.GeneticWeightSelect.dat }
```

```
        }
      Eta { 0.050000 }
      DerivEps { 0.000000 }
      BatchSize { 5 }
      #minEpochsForFitnessTest { 2 }
      #maxEpochsForFitnessTest { 3 }
      SelectWeights { T }
      SelectNodes { T }
      maxGrowthOfValError { 0.005000 }
    }
}
CCMenu {
  Clusters {
    mlp.inputNull {
      ActFunction {
        sel id
          plogistic {
            parameter { 0.500000 }
          }
          ptanh {
            parameter { 0.500000 }
          }
          pid {
            parameter { 0.500000 }
          }
        }
      InputModification {
       sel None
        AdaptiveUniformNoise {
          NoiseEta { 1.000000 }
          DampingFactor { 1.000000 }
        }
        AdaptiveGaussNoise {
          NoiseEta { 1.000000 }
          DampingFactor { 1.000000 }
        }
        FixedUniformNoise {
          SetNoiseLevel {
            NewNoiseLevel { 0.000000 }
          }
        }
        FixedGaussNoise {
          SetNoiseLevel {
            NewNoiseLevel { 0.000000 }
          }
        }
      }
      SaveNoiseLevel {
        Filename { noise_level.dat }
      }
      LoadNoiseLevel {
        Filename { noise_level.dat }
      }
      SaveManipulatorData {
        Filename { inputManip.dat }
      }
      LoadManipulatorData {
        Filename { inputManip.dat }
      }
```

```
          Norm { NoNorm }
        }
      mlp.indicatorNull {
        ActFunction {
         sel tanh
          plogistic {
            parameter { 0.500000 }
          }
          ptanh {
            parameter { 0.500000 }
          }
          pid {
            parameter { 0.500000 }
          }
        }
        Norm { NoNorm }
      }
      mlp.outputNull {
        ActFunction {
         sel id
          plogistic {
            parameter { 0.500000 }
          }
          ptanh {
            parameter { 0.500000 }
          }
          pid {
            parameter { 0.500000 }
          }
        }
        ErrorFunc {
         sel LnCosh
          |x| {
            parameter { 0.050000 }
          }
          LnCosh {
            parameter { 3.000000 }
          }
        }
        Norm { NoNorm }
        ToleranceFlag { F }
        Tolerance { 0.000000 0.000000 0.000000 0.000000 0.000000 0.000000
0.000000 0.000000 0.000000 0.000000 0.000000 0.000000 0.000000 0.000000 }
        Weighting { 1.000000 1.000000 1.000000 1.000000 1.000000 1.000000
1.000000 1.000000 1.000000 1.000000 1.000000 1.000000 1.000000 1.000000 }
      }
      mlp.external {
        ActFunction {
         sel id
          plogistic {
            parameter { 0.500000 }
          }
          ptanh {
            parameter { 0.500000 }
          }
          pid {
            parameter { 0.500000 }
          }
        }
```

```
InputModification {
 sel None
  AdaptiveUniformNoise {
    NoiseEta { 1.000000 }
    DampingFactor { 1.000000 }
  }
  AdaptiveGaussNoise {
    NoiseEta { 1.000000 }
    DampingFactor { 1.000000 }
  }
  FixedUniformNoise {
    SetNoiseLevel {
      NewNoiseLevel { 0.000000 }
    }
  }
  FixedGaussNoise {
    SetNoiseLevel {
      NewNoiseLevel { 0.000000 }
    }
  }
 }
 SaveNoiseLevel {
   Filename { noise_level.dat }
 }
 LoadNoiseLevel {
   Filename { noise_level.dat }
 }
 SaveManipulatorData {
   Filename { inputManip.dat }
 }
 LoadManipulatorData {
   Filename { inputManip.dat }
 }
 Norm { NoNorm }
}
mlp.hidden {
   ActFunction {
    sel tanh
     plogistic {
       parameter { 0.500000 }
     }
     ptanh {
       parameter { 0.500000 }
     }
     pid {
       parameter { 0.500000 }
     }
   }
   Norm { NoNorm }
}
mlp.inputPlus {
   ActFunction {
    sel id
     plogistic {
       parameter { 0.500000 }
     }
     ptanh {
       parameter { 0.500000 }
     }
```

```
            pid {
              parameter { 0.500000 }
            }
          }
          InputModification {
           sel None
            AdaptiveUniformNoise {
              NoiseEta { 1.000000 }
              DampingFactor { 1.000000 }
            }
            AdaptiveGaussNoise {
              NoiseEta { 1.000000 }
              DampingFactor { 1.000000 }
            }
            FixedUniformNoise {
              SetNoiseLevel {
                NewNoiseLevel { 0.000000 }
              }
            }
            FixedGaussNoise {
              SetNoiseLevel {
                NewNoiseLevel { 0.000000 }
              }
            }
          }
          SaveNoiseLevel {
            Filename { noise_level.dat }
          }
          LoadNoiseLevel {
            Filename { noise_level.dat }
          }
          SaveManipulatorData {
            Filename { inputManip.dat }
          }
          LoadManipulatorData {
            Filename { inputManip.dat }
          }
          Norm { NoNorm }
        }
        mlp.indicatorPlus {
          ActFunction {
           sel tanh
            plogistic {
              parameter { 0.500000 }
            }
            ptanh {
              parameter { 0.500000 }
            }
            pid {
              parameter { 0.500000 }
            }
          }
          Norm { NoNorm }
        }
        mlp.outputPlus {
          ActFunction {
           sel id
            plogistic {
              parameter { 0.500000 }
```

```
        }
        ptanh {
          parameter { 0.500000 }
        }
        pid {
          parameter { 0.500000 }
        }
      }
      ErrorFunc {
       sel LnCosh
        |x| {
          parameter { 0.050000 }
        }
        LnCosh {
          parameter { 3.000000 }
        }
      }
      Norm { NoNorm }
      ToleranceFlag { F }
      Tolerance { 0.000000 0.000000 0.000000 0.000000 0.000000 0.000000
0.000000 0.000000 0.000000 0.000000 0.000000 0.000000 0.000000 0.000000 }
      Weighting { 1.000000 1.000000 1.000000 1.000000 1.000000 1.000000
1.000000 1.000000 1.000000 1.000000 1.000000 1.000000 1.000000 1.000000 }
    }
    mlp.offset {
      ActFunction {
       sel id
        plogistic {
          parameter { 0.500000 }
        }
        ptanh {
          parameter { 0.500000 }
        }
        pid {
          parameter { 0.500000 }
        }
      }
      InputModification {
       sel None
        AdaptiveUniformNoise {
          NoiseEta { 1.000000 }
          DampingFactor { 1.000000 }
        }
        AdaptiveGaussNoise {
          NoiseEta { 1.000000 }
          DampingFactor { 1.000000 }
        }
        FixedUniformNoise {
          SetNoiseLevel {
            NewNoiseLevel { 0.000000 }
          }
        }
        FixedGaussNoise {
          SetNoiseLevel {
            NewNoiseLevel { 0.000000 }
          }
        }
      }
      SaveNoiseLevel {
```

```
        Filename { noise_level.dat }
      }
      LoadNoiseLevel {
        Filename { noise_level.dat }
      }
      SaveManipulatorData {
        Filename { inputManip.dat }
      }
      LoadManipulatorData {
        Filename { inputManip.dat }
      }
      Norm { NoNorm }
    }
    mlp.allocation {
      ActFunction {
       sel exp
        plogistic {
          parameter { 0.500000 }
        }
        ptanh {
          parameter { 0.500000 }
        }
        pid {
          parameter { 0.500000 }
        }
      }
      ErrorFunc {
       sel ProfMax
        |x| {
          parameter { 0.050000 }
        }
        LnCosh {
          parameter { 3.000000 }
        }
      }
      Norm { l1Norm }
      ToleranceFlag { F }
      Tolerance { 0.000000 0.000000 0.000000 0.000000 0.000000 0.000000
0.000000 0.000000 0.000000 0.000000 0.000000 0.000000 0.000000 0.000000 }
      Weighting { 1.000000 1.000000 1.000000 1.000000 1.000000 1.000000
1.000000 1.000000 1.000000 1.000000 1.000000 1.000000 1.000000 1.000000 }
    }
    mlp.benchmark {
      ActFunction {
       sel id
        plogistic {
          parameter { 0.500000 }
        }
        ptanh {
          parameter { 0.500000 }
        }
        pid {
          parameter { 0.500000 }
        }
      }
      ErrorFunc {
       sel |x|
        |x| {
          parameter { 0.050000 }
```

```
        }
        LnCosh {
          parameter { 3.000000 }
        }
      }
      Norm { NoNorm }
      ToleranceFlag { T }
      Tolerance { 0.015000 0.015000 0.030000 0.020000 0.030000 0.020000
0.015000 0.015000 0.030000 0.020000 0.040000 0.015000 0.050000 0.040000 }
      Weighting { 20.000000 20.000000 20.000000 20.000000 20.000000
20.000000 20.000000 20.000000 20.000000 20.000000 20.000000 20.000000
20.000000 20.000000 }
    }
  }
  Connectors {
    mlp.inputNull->indicatorNull {
      WeightWatcher {
        Active { F }
        EQUIV_MaxWeight { 1.000000 }
        EQUIV_MinWeight { 0.000000 }
      }
      LoadWeightsLocal {
        Filename { std }
      }
      SaveWeightsLocal {
        Filename { std }
      }
      Alive { T }
      EQUIV_WtFreeze { T }
      EQUIV_AllowPruning { F }
      EQUIV_EtaModifier { 1.000000 }
      EQUIV_AllowGeneticOpt { F }
      EQUIV_Penalty { NoPenalty }
    }
    mlp.indicatorNull->outputNull {
      WeightWatcher {
        Active { F }
        EQUIV_MaxWeight { 1.000000 }
        EQUIV_MinWeight { 0.000000 }
      }
      LoadWeightsLocal {
        Filename { std }
      }
      SaveWeightsLocal {
        Filename { std }
      }
      Alive { F }
      EQUIV_WtFreeze { T }
      EQUIV_AllowPruning { F }
      EQUIV_EtaModifier { 1.000000 }
      EQUIV_AllowGeneticOpt { F }
      EQUIV_Penalty { NoPenalty }
    }
    mlp.bias->outputNull {
      WeightWatcher {
        Active { F }
        EQUIV_MaxWeight { 1.000000 }
        EQUIV_MinWeight { 0.000000 }
      }
```

```
    LoadWeightsLocal {
      Filename { std }
    }
    SaveWeightsLocal {
      Filename { std }
    }
    Alive { T }
    EQUIV_WtFreeze { T }
    EQUIV_AllowPruning { F }
    EQUIV_EtaModifier { 1.000000 }
    EQUIV_AllowGeneticOpt { F }
    EQUIV_Penalty { NoPenalty }
  }
  mlp.indicatorNull->hidden {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { T }
    AllowGeneticOptimization { F }
    Penalty { NoPenalty }
    AllowPruning { F }
    EtaModifier { 1.000000 }
  }
  mlp.external->hidden {
    WeightWatcher {
      Active { F }
      MaxWeight { 1.000000 }
      MinWeight { 0.000000 }
    }
    LoadWeightsLocal {
      Filename { std }
    }
    SaveWeightsLocal {
      Filename { std }
    }
    Alive { T }
    WtFreeze { T }
    AllowGeneticOptimization { F }
    Penalty { NoPenalty }
    AllowPruning { F }
    EtaModifier { 1.000000 }
  }
  mlp.bias->hidden {
    WeightWatcher {
      Active { F }
      MaxWeight { 1.000000 }
      MinWeight { 0.000000 }
    }
    LoadWeightsLocal {
      Filename { std }
```

```
      }
      SaveWeightsLocal { ...
        Filename ( std )
      }
      Alive ( T )
      WtFreeze ( T )
      AllowGeneticOptimization ( F )
      Penalty ( WtDecay )
      AllowPruning ( F )
      EtaModifier ( 1.000000 )
    }
    mlp.inputPlus->indicatorPlus {
      LoadWeightsLocal {
        Filename ( std )
      }
      SaveWeightsLocal {
        Filename ( std )
      }
      Alive ( F )
      EQUIV_WtFreeze ( T )
      EQUIV_AllowPruning ( F )
      EQUIV_EtaModifier ( 1.000000 )
      EQUIV_AllowGeneticOpt ( F )
      EQUIV_Penalty ( NoPenalty )
    }
    mlp.hidden->indicatorPlus {
      WeightWatcher {
        Active ( F )
        MaxWeight ( 1.000000 )
        MinWeight ( 0.000000 )
      }
      LoadWeightsLocal {
        Filename ( std )
      }
      SaveWeightsLocal {
        Filename ( std )
      }
      Alive ( T )
      WtFreeze ( T )
      AllowGeneticOptimization ( F )
      Penalty ( NoPenalty )
      AllowPruning ( F )
      EtaModifier ( 1.000000 )
    }
    mlp.indicatorPlus->outputPlus {
      LoadWeightsLocal {
        Filename ( std )
      }
      SaveWeightsLocal {
        Filename ( std )
      }
      Alive ( T )
      EQUIV_WtFreeze ( T )
      EQUIV_AllowPruning ( F )
      EQUIV_EtaModifier ( 1.000000 )
      EQUIV_AllowGeneticOpt ( F )
      EQUIV_Penalty ( NoPenalty )
    }
    mlp.bias->outputPlus {
```

```
      LoadWeightsLocal {
        Filename { std }
      }
      SaveWeightsLocal {
        Filename { std }
      }
      Alive ( T )
      EQUIV_WtFreeze { T }
      EQUIV_AllowPruning { F }
      EQUIV_EtaModifier { 1.000000 }
      EQUIV_AllowGeneticOpt { F }
      EQUIV_Penalty { NoPenalty }
  }
  mlp.outputPlus->allocation {
      WeightWatcher {
        Active { T }
        MaxWeight { 1.000000 }
        MinWeight { 0.000100 }
      }
      LoadWeightsLocal {
        Filename { std }
      }
      SaveWeightsLocal {
        Filename { std }
      }
      Alive ( T )
      WtFreeze { F }
      AllowGeneticOptimization ( F )
      Penalty ( NoPenalty )
      AllowPruning ( F )
      EtaModifier { 1.000000 }
  }
  mlp.identity0 {
      WeightWatcher {
        Active ( F )
        MaxWeight { 1.000000 }
        MinWeight { 0.000000 }
      }
      LoadWeightsLocal {
        Filename { std }
      }
      SaveWeightsLocal {
        Filename { std }
      }
      Alive ( T )
      WtFreeze { T }
      AllowGeneticOptimization ( F )
      Penalty ( NoPenalty )
      AllowPruning ( F )
      EtaModifier { 1.000000 }
  }
  mlp.identity1 {
      WeightWatcher {
        Active ( F )
        MaxWeight { 1.000000 }
        MinWeight { 0.000000 }
      }
      LoadWeightsLocal {
        Filename { std }
```

```
            }
            SaveWeightsLocal {
              Filename { std }
            }
            Alive { T }
            WtFreeze { T }
            AllowGeneticOptimization { F }
            Penalty { NoPenalty }
            AllowPruning { F }
            EtaModifier { 1.000000 }
          }
        }
      AnySave {
        file_name { f.CCMenu.dat }
      }
      AnyLoad {
        file_name { f.CCMenu.dat }
      }
    }
  TestRun {
    Filename { Test }
    Part.Transformed { F }
  }
  Online {
    Filename { Online.dat }
  }
}
```

## 2. Spezifikations-Datei:

```
APPLICATION G7_PORTFOLIO_SECTOR_MODEL

MODE MONTH WEEK 7

FROM MIN TO MAX

TRAINING FROM 01.06.1990 TO 30.06.1993

VALIDATION RANDOM 0%


INPUT CLUSTER mlp.inputNull

        BEGIN  asset1
             x = FILE DATA/asset1.dat

           INPUT = 10 * (x / x(-6)  - 1)
        END


        BEGIN  asset2
           x = FILE DATA/asset2.dat

           INPUT = 10 * (x / x(-6)  - 1)
        END
```

```
BEGIN  asset3
    x = FILE DATA/asset3.dat

   INPUT = 10 * (x / x(-6)  - 1)
END


BEGIN  asset4
   x = FILE DATA/asset4.dat

   INPUT = 10 * (x / x(-6)  - 1)
END


BEGIN  asset5
    x = FILE DATA/asset5.dat

   INPUT = 10 * (x / x(-6)  - 1)
END


BEGIN  asset6
   x = FILE DATA/asset6.dat

   INPUT = 10 * (x / x(-6)  - 1)
END


BEGIN  asset7
    x = FILE DATA/asset7.dat

   INPUT = 10 * (x / x(-6)  - 1)
END


BEGIN  asset8
   x = FILE DATA/asset8.dat

   INPUT = 10 * (x / x(-6)  - 1)
END


BEGIN  asset9
    x = FILE DATA/asset9.dat

   INPUT = 10 * (x / x(-6)  - 1)
END


BEGIN  asset10
   x = FILE DATA/asset10.dat

   INPUT = 10 * (x / x(-6)  - 1)
END


BEGIN  asset11
```

```
        x = FILE DATA/asset11.dat

   INPUT = 10 * (x / x(-6)  - 1)
END


BEGIN  asset12
   x = FILE DATA/asset12.dat

   INPUT = 10 * (x / x(-6)  - 1)
END


BEGIN  asset13
     x = FILE DATA/asset13.dat

   INPUT = 10 * (x / x(-6)  - 1)
END


BEGIN  asset14
   x = FILE DATA/asset14.dat

   INPUT = 10 * (x / x(-6)  - 1)
END



INPUT CLUSTER mlp.inputPlus

BEGIN  asset1
     x = FILE DATA/asset1.dat

   INPUT = 10 * (x(6) / x  - 1)
END


BEGIN  asset2
   x = FILE DATA/asset2.dat

   INPUT = 10 * (x(6) / x  - 1)
END


BEGIN  asset3
     x = FILE DATA/asset3.dat

   INPUT = 10 * (x(6) / x  - 1)
END



BEGIN  asset4
   x = FILE DATA/asset4.dat

   INPUT = 10 * (x(6) / x  - 1)
END
```

```
BEGIN   asset5
     x = FILE DATA/asset5.dat

   INPUT = 10 * (x(6) / x  - 1)
END


BEGIN   asset6
   x = FILE DATA/asset6.dat

   INPUT = 10 * (x(6) / x  - 1)
END


BEGIN   asset7
     x = FILE DATA/asset7.dat

   INPUT = 10 * (x(6) / x  - 1)
END


BEGIN asset8
   x = FILE DATA/asset8.dat

   INPUT = 10 * (x(6) / x  - 1)
END


BEGIN   asset9
     x = FILE DATA/asset9.dat

   INPUT = 10 * (x(6) / x  - 1)
END


BEGIN   asset10
   x = FILE DATA/asset10.dat

   INPUT = 10 * (x(6) / x  - 1)
END


BEGIN   asset11
     x = FILE DATA/asset11.dat

   INPUT = 10 * (x(6) / x  - 1)
END


BEGIN   asset12
   x = FILE DATA/asset12.dat

   INPUT = 10 * (x(6) / x  - 1)
END


BEGIN   asset13
     x = FILE DATA/asset13.dat
```

```
        INPUT = 10 * (x(6) / x  - 1)
     END



     BEGIN  asset14
        x = FILE DATA/asset14.dat

        INPUT = 10 * (x(6) / x  - 1)
     END




INPUT CLUSTER mlp.external

     BEGIN  external
        x = FILE DATA/external.dat

        INPUT = scale(x / x(-6)  - 1)
     END


     BEGIN  external
        x = FILE DATA/external.dat

        INPUT = scale(x / x(-6)  - 1)
             LAG -2
     END


     BEGIN  external
        x = FILE DATA/external.dat

        INPUT = scale(x / x(-6)  - 1)
             LAG -3
     END


     BEGIN  external
        x = FILE DATA/external.dat

        INPUT = scale(x / x(-6)  - 1)
             LAG -5
     END


     BEGIN  external
        x = FILE DATA/external.dat

        INPUT = scale(x / x(-6)  - 1)
             LAG -3
     END


     BEGIN  external
        x = FILE DATA/external.dat

        INPUT = scale(x / x(-6)  - 1)
```

```
                    LAG -8
END



BEGIN  external
   x = FILE DATA/external.dat

   INPUT = scale(x / x(-6)  - 1)
END


BEGIN  external
   x = FILE DATA/external.dat

   INPUT = scale(x / x(-6)  - 1)
           LAG -1
END


BEGIN  external
   x = FILE DATA/external.dat

   INPUT = scale(x / x(-6)  - 1)
           LAG -2
END


BEGIN  external
   x = FILE DATA/external.dat

   INPUT = scale(x / x(-6)  - 1)
           LAG -2
END


BEGIN  external
   x = FILE DATA/external.dat

   INPUT = scale(x / x(-6)  - 1)
           LAG -2
END


BEGIN  external
   x = FILE DATA/external.dat

   INPUT = scale(x / x(-6)  - 1)
           LAG -2
END



BEGIN  external
   x = FILE DATA/external.dat

   INPUT = scale(x / x(-6)  - 1)
```

```
END


BEGIN   external
   x = FILE DATA/external.dat

   INPUT = scale(x / x(-6)   - 1)
           LAG -1
END


BEGIN   external
   x = FILE DATA/external.dat

   INPUT = scale(x / x(-6)   - 1)
           LAG -2
END


BEGIN   external
   x = FILE DATA/external.dat

   INPUT = scale(x / x(-6)   - 1)
           LAG -1
END


BEGIN   external
   x = FILE DATA/external.dat

   INPUT = scale(x / x(-6)   - 1)
           LAG -3
END


BEGIN   external
   x = FILE DATA/external.dat

   INPUT = scale(x / x(-6)   - 1)
           LAG -1
END


NPUT CLUSTER mlp.offset

    BEGIN   ln(benchmark)

        INPUT = ln(1.50 / 100)
        INPUT = ln(1.50 / 100)

        INPUT = ln(3.00 / 100)
        INPUT = ln(5.00 / 100)

        INPUT = ln(3.00 / 100)
        INPUT = ln(5.00 / 100)

        INPUT = ln(1.50 / 100)
        INPUT = ln(3.50 / 100)
```

```
        INPUT = ln(9.00 / 100)
        INPUT = ln(8.00 / 100)

        INPUT = ln(5.00 / 100)
        INPUT = ln(4.00 / 100)

        INPUT = ln(28.0 / 100)
        INPUT = ln(22.0 / 100)
    END


TARGET CLUSTER mlp.outputNull

    BEGIN  asset1
        x = FILE DATA/asset1.dat

        TARGET = 10 * (x / x(-6)  - 1)
    END


    BEGIN  asset2
      x = FILE DATA/asset2.dat

        TARGET = 10 * (x / x(-6)  - 1)
    END


    BEGIN  asset3
        x = FILE DATA/asset3.dat

        TARGET = 10 * (x / x(-6)  - 1)
    END



    BEGIN  asset4
      x = FILE DATA/asset4.dat

        TARGET = 10 * (x / x(-6)  - 1)
    END


    BEGIN  asset5
        x = FILE DATA/asset5.dat

        TARGET = 10 * (x / x(-6)  - 1)
    END


    BEGIN  asset6
       x = FILE DATA/asset6.dat

        TARGET = 10 * (x / x(-6)  - 1)
    END


    BEGIN  asset7
```

```
        x = FILE DATA/asset7.dat

    TARGET = 10 * (x / x(-6)  - 1)
END


BEGIN  asset8
  x = FILE DATA/asset8.dat

    TARGET = 10 * (x / x(-6)  - 1)
END


BEGIN  asset9
      x = FILE DATA/asset9.dat

    TARGET = 10 * (x / x(-6)  - 1)
END


BEGIN  asset10
  x = FILE DATA/asset10.dat

    TARGET = 10 * (x / x(-6)  - 1)
END


BEGIN  asset11
      x = FILE DATA/asset11.dat

    TARGET = 10 * (x / x(-6)  - 1)
END


BEGIN  asset12
  x = FILE DATA/asset12.dat

    TARGET = 10 * (x / x(-6)  - 1)
END


BEGIN  asset13
      x = FILE DATA/asset13.dat

    TARGET = 10 * (x / x(-6)  - 1)
END


BEGIN  asset14
  x = FILE DATA/asset14.dat

    TARGET = 10 * (x / x(-6)  - 1)
END
```

```
TARGET CLUSTER mlp.outputPlus
```

```
BEGIN   asset1
       x = FILE DATA/asset1.dat

    TARGET = 10 * (x(6) / x  - 1)
            ASSIGN TO asset1
END


BEGIN   asset2
    x = FILE DATA/asset2.dat

    TARGET = 10 * (x(6) / x  - 1)
            ASSIGN TO asset2
END


BEGIN   asset3
       x = FILE DATA/asset3.dat

    TARGET = 10 * (x(6) / x  - 1)
            ASSIGN TO asset3
END


BEGIN   asset4
    x = FILE DATA/asset4.dat

    TARGET = 10 * (x(6) / x  - 1)
            ASSIGN TO asset4
END


BEGIN   asset5
       x = FILE DATA/asset5.dat

    TARGET = 10 * (x(6) / x  - 1)
            ASSIGN TO asset5
END


BEGIN   asset6
    x = FILE DATA/asset6.dat

    TARGET = 10 * (x(6) / x  - 1)
            ASSIGN TO asset6
END


BEGIN   asset7
       x = FILE DATA/asset7.dat

    TARGET = 10 * (x(6) / x  - 1)
            ASSIGN TO asset7
END


BEGIN asset8
    x = FILE DATA/asset8.dat
```

```
                TARGET = 10 * (x(6) / x  - 1)
                        ASSIGN TO asset8
        END


        BEGIN   asset9
            x = FILE DATA/asset9.dat

            TARGET = 10 * (x(6) / x  - 1)
                    ASSIGN TO asset9
        END


        BEGIN   asset10
           x = FILE DATA/asset10.dat

            TARGET = 10 * (x(6) / x  - 1)
                    ASSIGN TO asset10
        END


        BEGIN   asset11
            x = FILE DATA/asset11.dat

            TARGET = 10 * (x(6) / x  - 1)
                    ASSIGN TO asset11
        END


        BEGIN   asset12
           x = FILE DATA/asset12.dat

            TARGET = 10 * (x(6) / x  - 1)
                    ASSIGN TO asset12
        END


        BEGIN   asset13
            x = FILE DATA/asset13.dat

            TARGET = 10 * (x(6) / x  - 1)
                    ASSIGN TO asset13
        END


        BEGIN   asset14
           x = FILE DATA/asset14.dat

            TARGET = 10 * (x(6) / x  - 1)
                    ASSIGN TO asset14
        END



    TARGET CLUSTER mlp.allocation

        BEGIN   asset1
```

```
        x = FILE DATA/asset1.dat

    TARGET = 20 * (x(6) / x  - 1)
             ASSIGN TO asset1_allocation
END

BEGIN  asset2
   x = FILE DATA/asset2.dat

    TARGET = 20 * (x(6) / x  - 1)
             ASSIGN TO asset2_allocation
END


BEGIN  asset3
       x = FILE DATA/asset3.dat

    TARGET = 20 * (x(6) / x  - 1)
             ASSIGN TO asset3_allocation
END


BEGIN  asset4
   x = FILE DATA/asset4.dat

    TARGET = 20 * (x(6) / x  - 1)
             ASSIGN TO asset4_allocation
END


BEGIN  asset5
       x = FILE DATA/asset5.dat

    TARGET = 20 * (x(6) / x  - 1)
             ASSIGN TO asset5_allocation
END


BEGIN  asset6
   x = FILE DATA/asset6.dat

    TARGET = 20 * (x(6) / x  - 1)
             ASSIGN TO asset6_allocation
END


BEGIN  asset7
       x = FILE DATA/asset7.dat

    TARGET = 20 * (x(6) / x  - 1)
             ASSIGN TO asset7_allocation
END


BEGIN asset8
   x = FILE DATA/asset8.dat

    TARGET = 20 * (x(6) / x  - 1)
```

```
                    ASSIGN TO asset8_allocation
END


BEGIN  asset9
      x = FILE DATA/asset9.dat

   TARGET = 20 * (x(6) / x  - 1)
            ASSIGN TO asset9_allocation
END


BEGIN  asset10
   x = FILE DATA/asset10.dat

   TARGET = 20 * (x(6) / x  - 1)
            ASSIGN TO asset10_allocation
END


BEGIN  asset11
      x = FILE DATA/asset11.dat

   TARGET = 20 * (x(6) / x  - 1)
            ASSIGN TO asset11_allocation
END


BEGIN  asset12
   x = FILE DATA/asset12.dat

   TARGET = 20 * (x(6) / x  - 1)
            ASSIGN TO asset12_allocation
END


BEGIN  asset13
      x = FILE DATA/asset13.dat

   TARGET = 20 * (x(6) / x  - 1)
            ASSIGN TO asset13_allocation
END


BEGIN  asset14
   x = FILE DATA/asset14.dat

   TARGET = 20 * (x(6) / x  - 1)
            ASSIGN TO asset14_allocation
END



TARGET CLUSTER mlp.benchmark

   BEGIN  benchmark

      TARGET = 1.50 / 100
            ASSIGN TO asset1_marketShare
```

```
                TARGET = 1.50 / 100
                        ASSIGN TO asset2_marketShare

                TARGET = 3.00 / 100
                        ASSIGN TO asset3_marketShare

                TARGET = 5.0  / 100
                        ASSIGN TO asset4_marketShare

                TARGET = 3.00 / 100
                        ASSIGN TO asset5_marketShare

                TARGET = 5.00 / 100
                        ASSIGN TO asset6_marketShare

                TARGET = 1.50 / 100
                        ASSIGN TO asset7_marketShare

                TARGET = 3.50 / 100
                        ASSIGN TO asset8_marketShare

                TARGET = 9.00 / 100
                        ASSIGN TO asset9_marketShare

                TARGET = 8.00 / 100
                        ASSIGN TO asset10_marketShare

                TARGET = 5.00 / 100
                        ASSIGN TO asset11_marketShare

                TARGET = 4.00 / 100
                        ASSIGN TO asset12_marketShare

                TARGET = 28.0 / 100
                        ASSIGN TO asset13_marketShare

                TARGET = 22.0 / 100
                        ASSIGN TO asset14_marketShare
            END


    //
    ===========================================================================
    ===============
    // Additional forecastsignals                            Additional
    forecastsignals
    //
    ===========================================================================
    ===============


FORECAST SIGNAL

        BEGIN  assetAllocation signals
            allocation1 = OUTPUT asset1_allocation
            allocation2 = OUTPUT asset2_allocation
```

```
allocation3  = OUTPUT asset3_allocation
allocation4  = OUTPUT asset4_allocation
allocation5  = OUTPUT asset5_allocation
allocation6  = OUTPUT asset6_allocation
allocation7  = OUTPUT asset7_allocation
allocation8  = OUTPUT asset8_allocation
allocation9  = OUTPUT asset9_allocation
allocation10 = OUTPUT asset10_allocation
allocation11 = OUTPUT asset11_allocation
allocation12 = OUTPUT asset12_allocation
allocation13 = OUTPUT asset13_allocation
allocation14 = OUTPUT asset14_allocation

SIGNAL = allocation1

SIGNAL = allocation2

SIGNAL = allocation3

SIGNAL = allocation4

SIGNAL = allocation5

SIGNAL = allocation6

SIGNAL = allocation7

SIGNAL = allocation8

SIGNAL = allocation9

SIGNAL = allocation10

SIGNAL = allocation11

SIGNAL = allocation12

SIGNAL = allocation13

SIGNAL = allocation14
END


//
=============================================================================
===============
// END of FORECASTSIGNALs: AssetAllocation        END of FORECASTSIGNALS:
AssetAllocation
//
=============================================================================
===============
//
```

## 3. Modell-Top-Datei:

```
net {
        const nr_indicator  = 4;
        const nr_hidden      = 6;


        cluster INPUT        ( EQUIVALENT, IN  );
        cluster INDICATOR ( EQUIVALENT, DIM(nr_indicator ), HID );
        cluster OUTPUT       ( EQUIVALENT, OUT );

        connect INPUT_INDICATOR   ( INPUT      -> INDICATOR);
        connect INDICATOR_OUTPUT  ( INDICATOR -> OUTPUT   );
        connect BIAS_OUTPUT       ( bias       -> OUTPUT   );


        INPUT      inputNull;
        INDICATOR indicatorNull;
        OUTPUT     outputNull;

        cluster ( IN ) external;
        cluster ( DIM(nr_hidden), HID) hidden;

        INPUT      inputPlus;
        INDICATOR indicatorPlus;
        OUTPUT     outputPlus;

        cluster ( IN  ) offset;
        cluster ( OUT ) allocation;
        cluster ( OUT ) benchmark;


        connect ( inputNull      -> indicatorNull, INPUT_INDICATOR );
        connect ( indicatorNull -> outputNull    , INDICATOR_OUTPUT);
        connect ( bias           -> outputNull    , BIAS_OUTPUT      );

        connect ( inputPlus      -> indicatorPlus, INPUT_INDICATOR );
        connect ( indicatorPlus -> outputPlus    , INDICATOR_OUTPUT);
        connect ( bias           -> outputPlus    , BIAS_OUTPUT      );

        connect ( indicatorNull -> hidden        );
        connect ( external       -> hidden        );
        connect ( bias           -> hidden        );
        connect ( hidden         -> indicatorPlus);

        connect ( outputPlus     -> allocation, DIAGONAL(0.1));
        connect ( offset         -> allocation, DIAGONAL(1.0)) identity0;
        connect ( allocation     -> benchmark , DIAGONAL(1.0)) identity1;
} mlp;


setup {
    init mlp.identity0 with ( WtFreeze {T} );
    init mlp.identity1 with ( WtFreeze {T} );
}
```

**EP 1 145 190 B1**

In diesem Dokument sind folgende Veröffentlichungen zitiert:

[1] S. Hayken, Neural Networks: A Comprehensive Foundation, Mc Millan College Publishing Company, ISBN 0-02-352761-7, S. 498-533, 1994.

[2] Ackley, Hruton, Scynowski, A learning algorithm for Boltzmann machines, Cognitive Science, 9, S, 147 - 169, 1985

[3] H. Rehkugler und H. G. Zimmermann, Neuronale Netze in der Ökonomie, Grundlagen und finanzwirtschaftliche Anwendungen, Verlag Franz Vahlen München, ISBN 3-8006-1871-0, S. 3-90, 1994.

[4] US-A-5 761 386 (Lawrence et al.)

**Patentansprüche**

1. Anordnung miteinander verbundener Rechenelemente,

    a) mit ersten Eingangs-Rechenelementen (101, 102), denen erste Zeitreihenwerte, welche jeweils einen Zustand eines Systems zu einem Zeitpunkt beschreiben, zuführbar sind,
    b) mit Transformations-Rechenelementen (111, 112) zur Transformation der ersten Zeitreihenwerte in einen vorgegebenen Raum, welche erste Transformations-Rechenelemente mit den ersten Eingangs-Rechenelementen (101, 102) verbunden sind, und an welchen Transformations-Rechenelementen transformierte Signale abgreifbar sind, wobei zumindest zwei transformierte Signale jeweils aufeinanderfolgende Zeitpunkte betreffen,
    c) mit einem zweiten Eingangs-Rechenelement (121), welchem zweite Zeitreihenwerte, welche jeweils auf einen Zustand des Systems Einfluß nehmen, zuführbar sind,
    d) mit einem ersten Verbund-Rechenelement (131), welches mit dem zweiten Eingangs-Rechenelement (121) und mit einem ersten (111) und einem zweiten Transformations-Rechenelement (112) derart verbunden ist, daß dem ersten Verbund-Rechenelement das transformierte Signal des ersten Transformations-Rechenelement (111) zuführbar ist und ein an dem ersten Verbund-Rechenelement abgreifbares Signal dem zweiten Transformations-Rechenelement (112) zuführbar ist,
    e) mit Ausgangs-Rechenelementen (141, 142) , welche mit den Transformations-Rechenelementen (111, 112) verbunden sind, wobei an den Ausgangs-Rechenelementen jeweils ein Ausgangssignal abgreifbar ist.

2. Anordnung nach Anspruch 1,
   bei der zumindest ein Teil der Rechenelemente künstliche Neuronen sind.

3. Anordnung nach Anspruch 1 oder 2,
   bei der mindestens ein Teil der Verbindungen zwischen Rechenelementen variabel ausgestaltet ist.

4. Anordnung nach einem der Ansprüche 1 bis 3,
   bei der zumindest Teile der Verbindungen gleiche Gewichtswerte aufweisen.

5. Anordnung nach einem der Ansprüche 1 bis 4,
   mit zweiten Verbund-Rechenelementen, die jeweils mit einem Eingangs-Rechenelement und einem Transformations-Rechenelement verbunden sind.

6. Anordnung nach einem der Ansprüche 1 bis 5,
   mit dritten Verbund-Rechenelementen, die jeweils mit einem Ausgangs-Rechenelement und einem Transformations-Rechenelement verbunden sind.

7. Anordnung nach einem der Ansprüche 1 bis 6,
   mit weiteren zueinander zugehörigen Rechenlementen, welche mit einem Ausgangs-Rechenelement verbunden sind und mit welchen eine vorgebbare Transformation durchführbar ist.

8. Anordnung nach Anspruch 7,
   bei der unter Verwendung der vorgebbaren Transformation ein optimierter Zustand des dynamischen Systems ermittelbar ist.

**9.** Anordnung nach Anspruch 8,
bei der mit den weiteren zueinander zugehörigen Rechenelementen folgende Transformation durchführbar ist:

$$a_i(x_1,\ldots,x_m,w_1,\ldots,w_m) = \frac{\mu_i * \exp(w_i * x_i)}{\displaystyle\sum_{k=1}^{m} \mu_k * \exp(w_k * x_k)}$$

mit:

i,k : Indizes
m : Anzahl der vorgegeben Aktien, m = 100
$a_i$ : Gewichtung einer Aktie i zu einem Zeitpunkt (t+1)
$\mu_i$ : vorgegebene Gewichtung einer Aktie i in einem Vergleichs-Portfolio (Benchmark-Asset)
$w_1,\ldots,w_m$ : Parameter bzw. Gewichte
$x_1,\ldots,x_m$ : prognostizierte Aktienkurse der vorgegebenen Aktien zu dem Zeitpunkt (t+1)
exp (...) : Exponentialfunktion.

**10.** Anordnung nach einem der Ansprüche 1 bis 9,
eingesetzt zur Ermittlung einer Dynamik eines dynamischen Prozesses.

**11.** Anordnung nach Anspruch 10,
mit einer Meßanordnung zur Erfassung physikalischer Signale, mit denen der dynamische Prozeß beschrieben wird.

**12.** Anordnung nach Anspruch 10 oder 11 ohne 9,
eingesetzt zur Ermittlung der Dynamik eines dynamischen Prozesses in einem chemischen Reaktor.

**13.** Anordnung nach Anspruch 10 oder 11,
eingesetzt zur Ermittlung der Dynamik eines ökonomischen Prozesses.

**14.** Verfahren zur rechnergestützten Ermittlung einer Dynamik, die einem dynamischen Prozeß zugrunde liegt, mit folgenden Schritten:

a) der dynamische Prozeß wird durch eine erste Zeitreihe mit Zeitreihenwerten in einem ersten Zustandsraum beschrieben, wobei mindestens ein erster Zeitreihenwert der ersten Zeitreihe einen Zustand des dynamischen Prozesses zu einem ersten Zeitpunkt beschreibt,
b) der erster Zeitreihenwert der ersten Zeitreihe wird in einen zweiten Zustandsraum transformiert,
c) der dynamische Prozeß wird durch eine zweite Zeitreihe mit Zeitreihenwerten in einem dritten Zustandsraum beeinflußt, wobei mindestens ein erster Zeitreihenwert der zweiten Zeitreihe einen Zustand des dynamischen Prozesses beeinflußt,
d) der erste Zeitreihenwert der ersten Zeitreihe in dem zweiten Zustandsraum wird unter Verwendung des ersten Zeitreihenwertes der zweiten Zeitreihe in dem dritten Zustandsraum einer Abbildung auf einen zweiten Zeitreihenwert der ersten Zeitreihe in dem zweiten Zustandsraum unterzogen,
e) aus den Zeitreihenwerten in dem zweiten Zustandsraum wird die Dynamik des dynamischen Prozesses ermittelt.

**15.** Verfahren nach Anspruch 14,
bei dem die Zeitreihenwerte Vektoren vorgebbarer Dimension sind.

**16.** Verfahren nach Anspruch 14 oder 15,
bei dem der zweite Zeitreihenwert der ersten Zeitreihe in dem zweiten Zustandsraum in den ersten Zustandsraum rücktransformiert wird und

bei dem der zweite Zeitreihenwert der ersten Zeitreihe in dem ersten Zustandsraum unter Verwendung einer vorgebbaren Transformation in einen vierten Zustandsraum transformiert wird.

17. Verfahren nach Anspruch 16,
bei dem unter Verwendung der vorgebbaren Transformation ein optimierter Zustand des dynamischen Systems ermittelt wird.

18. Verfahren nach Anspruch 17,
bei dem mit der vorgebbaren Transformation folgende Abbildung durchgeführt wird:

$$a_i(x_1, \ldots, x_m, w_1, \ldots, w_m) = \frac{\mu_i * \exp(w_i * x_i)}{\sum_{k=1}^{m} \mu_k * \exp(w_k * x_k)}$$

mit:

| | |
|---|---|
| i,k | : Indizes |
| m | : Anzahl der vorgegeben Aktien, m = 100 |
| $a_i$ | : Gewichtung einer Aktie i zu einem Zeitpunkt (t+1) |
| $\mu_i$ | : vorgegebene Gewichtung einer Aktie i in einem Vergleichs-Portfolio (Benchmark-Asset) |
| $w_1, \ldots, w_m$ | : Parameter bzw. Gewichte |
| $x_1, \ldots, x_m$ | : prognostizierte Aktienkurse der vorgegebenen Aktien zu dem Zeitpunkt (t+1) |
| exp (...) | : Exponentialfunktion. |

19. Verfahren nach einem der Ansprüche 14 bis 18,
bei dem die Zeitreihenwerte aus physikalischen Signalen ermittelt werden.

20. Verfahren nach Anspruch 19 ohne 18,
bei dem die Zeitreihenwerte einen dynamischen Prozeß in einem chemischen Reaktor beschreiben.

21. Verfahren nach Anspruch 19,
bei dem die Zeitreihenwerte einen ökonomischen Prozeß beschreiben.

22. Anordnung nach Anspruch 1,
eingesetzt zur rechnergestützten Ermittlung einer Dynamik, die einem dynamischen Prozeß zugrundeliegt,
bei dem der Anordnung ein erster Zeitreihenwert, welcher den dynamischen Prozeß beschreibt, zugeführt wird,
und bei dem von der Anordnung das Ausgangssignal ermittelt wird, aus der die Dynamik ermittelt wird.

23. Verfahren zum rechnergestützten Trainieren der Anordnung nach Anspruch 1,
bei dem die Anordnung unter Verwendung vorgegebener Trainingsdaten trainiert wird, welche der Anordnung zugeführt werden, wobei beim Training in Abhängigkeit eines Trainingsschritts Verbindungen zwischen Rechenelementen eingefroren und/oder gelöst werden.

24. Verfahren nach Anspruch 23,
bei dem in einem ersten Trainingsschritt eine Kompression und eine Dekompression trainiert und in einem zweiten Trainingsschritt eine Prognose trainiert werden.

25. Verfahren nach Anspruch 23 oder 24,
bei dem die Anordnung folgende weiteren Komponenten aufweist: weitere zueinander zugehörige Rechenelemente, welche mit einem Ausgangs-Rechenelement verbunden sind und mit welchen eine vorgebbare Transformation durchführbar ist,
und bei dem in einem weiteren Trainingsschritt die weiteren zueinander zugehörigen Rechenelemente trainiert werden.

26. Verfahren nach Anspruch 25,

bei dem unter Verwendung der vorgebbaren Transformation ein optimierter Zustand des dynamischen Systems ermittelt wird.

**27.** Verfahren nach Anspruch 26,
bei dem mit der vorgebbaren Transformation folgende Abbildung durchgeführt wird:

$$a_i(x_1,\ldots,x_m,w_1,\ldots,w_m) = \frac{\mu_i * \exp(w_i * x_i)}{\sum\limits_{k=1}^{m} \mu_k * \exp(w_k * x_k)}$$

mit:

| | |
|---|---|
| i,k | : Indizes |
| m | : Anzahl der vorgegeben Aktien, m = 100 |
| $a_i$ | : Gewichtung einer Aktie i zu einem Zeitpunkt (t+1) |
| $\mu_i$ | : vorgegebene Gewichtung einer Aktie i in einem Vergleichs-Portfolio (Benchmark-Asset) |
| $w_1,\ldots,w_m$ | : Parameter bzw. Gewichte |
| $x_1,\ldots,x_m$ | : prognostizierte Aktienkurse der vorgegebenen Aktien zu dem Zeitpunkt (t+1) |
| exp(...) | : Exponentialfunktion. |

## Claims

1. Arrangement of interconnected computing elements,

   a) having first input computing elements (101, 102) to which first time series values can be fed which respectively describe a state of a system at an instant,
   b) having transformation computing elements (111, 112) for transforming the first time series values into a predetermined space, which first transformation computing elements are connected to the first input computing elements (101, 102), and at which transformation computing elements transformed signals can be tapped, at least two transformed signals respectively relating to consecutive instants,
   c) having a second input computing element (121), which can be fed second time series values which respectively influence a state of the system,
   d) having a first composite computing element (131) which is connected to the second input computing element (121) and to a first (111) and a second transformation computing element (112) in such a way that the first composite computing element can be fed the transformed signal of the first transformation computing element (111), and a signal which can be tapped at the first composite computing element can be fed to the second transformation computing element (112), and
   e) having output computing elements (141, 142) which are connected to the transformation computing elements (111, 112), it being respectively possible to tap an output signal at the output computing elements.

2. Arrangement according to Claim 1, in which at least some of the computing elements are artificial neurons.

3. Arrangement according to Claim 1 or 2, in which at least some of the connections between computing elements are of variable configuration.

4. Arrangement according to one of Claims 1 to 3, in which at least parts of the connections have identical weights.

5. Arrangement according to one of Claims 1 to 4, having second composite computing elements which are respectively connected to an input computing element and a transformation computing element.

6. Arrangement according to one of Claims 1 to 5, having third composite computing elements which are respectively connected to an output computing element and a transformation computing element.

7. Arrangement according to one of Claims 1 to 6, having further computing elements belonging to one another which are connected to an output computing element and with the aid of which a prescribable transformation can be carried out.

8. Arrangement according to Claim 7, in which an optimized state of the dynamic system can be determined using the prescribable transformation.

9. Arrangement according to Claim 8, in which the following transformation can be carried out with the aid of the further computing elements belonging to one another:

$$a_i(x_1, \ldots, x_m, w_1, \ldots, w_m) = \frac{\mu_i * \exp(w_i * x_i)}{\sum_{k=1}^{m} \mu_k * \exp(w_k * x_k)}$$

where:

i,k : indexes
m : number of the prescribed stocks, m = 100
$a_i$ : weighting of a stock i at an instant (t+1)
$\mu_i$ : prescribed weighting of a stock i in a reference portfolio (benchmark asset)
$w_1, \ldots, w_m$ : parameters and weights
$x_1, \ldots, x_m$ : forecast stock prices of the prescribed stocks at the instant (t+1)
exp(...) : exponential function.

10. Arrangement according to one of Claims 1 to 9, as used to determine a dynamics of a dynamic process.

11. Arrangement according to Claim 10, having a measuring arrangement for detecting physical signals with the_aid of which the dynamic process is described.

12. Arrangement according to Claim 10 or 11 without 9, as used to determine the dynamics of a dynamic process in a chemical reactor.

13. Arrangement according to Claim 10 or 11, as used to determine the dynamics of an economic process.

14. Method for computer-aided determination of a dynamics on which a dynamic process is based, having the following steps:

   a) the dynamic process is described by a first time series with time series values in a first state space, at least one first time series value of the first time series describing a state of the dynamic process at a first instant,
   b) the first time series value of the first time series is transformed into a second state space,
   c) the dynamic process is influenced by a second time series with time series values in a third state space, at least one first time series value of the second time series influencing a state of the dynamic process,
   d) using the first time series value of the second time series in the third state space, the first time series value of the first time series in the second state space is subjected to a mapping onto a second time series value of the first time series in the second state space, and
   e) the dynamics of the dynamic process is determined from the time series values in the second state space.

15. Method according to Claim 14, in which the time series values are vectors of prescribable dimension.

16. Method according to Claim 14 or 15, in which the second time series value of the first time series in the second state space is inversely transformed into the first state space, and in which, using a prescribable transformation, the second time series value of the first time series in the first state space is transformed into a fourth state space.

17. Method according to Claim 16, in which an optimized state of the dynamic system is determined using the prescribable transformation.

**18.** Method according to Claim 17, in which the following mapping is carried out with the aid of the prescribable transformation:

$$a_i(x_1, \ldots, x_m, w_1, \ldots, w_m) = \frac{\mu_i \ast \exp(w_i \ast x_i)}{\sum_{k=1}^{m} \mu_k \ast \exp(w_k \ast x_k)}$$

where:

| | |
|---|---|
| i, k | : indexes |
| m | : number of the prescribed stocks, m = 100 |
| $a_i$ | : weighting of a stock i at an instant (t+1) |
| $\mu_i$ | : prescribed weighting of a stock i in a reference portfolio (benchmark asset) |
| $w_1, \ldots, w_m$ : | parameters and weights |
| $x_1, \ldots, w_m$ : | forecast stock prices of the prescribed stocks at the instant (t+1) |
| exp(...) | : exponential function. |

**19.** Method according to one of Claims 14 to 18, in which the time series values are determined from physical signals.

**20.** Method according to Claim 19 without 18, in which the time series values describe a dynamic process in a chemical reactor.

**21.** Method according to Claim 19, in which the time series values describe an economic process.

**22.** Arrangement according to Claim 1, used for computer-aided determination of a dynamics on which a dynamic process is based, in which the arrangement is fed a first time series value which describes the dynamic process, and in which the arrangement determines the output signal from which the dynamics is determined.

**23.** Method for computer-aided training of the arrangement according to Claim 1, in which the arrangement is trained using prescribed training data which are fed to the arrangement, connections between computing elements being frozen and/or released during training as a function of a training step.

**24.** Method according to Claim 23, in which a compression and a decompression are trained in a first training step, and a forecast is trained in a second training step.

**25.** Method according to Claim 23 or 24, in which the arrangement has the following further components: further computing elements belonging to one another which are connected to an output computing element and with the aid of which a prescribable transformation can be carried out, and in which the further computing elements belonging to one another are trained in a further training step.

**26.** Method according to Claim 25, in which an optimized state of the dynamic system is determined using the prescribable transformation.

**27.** Method according to Claim 26, in which the following mapping can be carried out with the aid of the prescribable transformation:

$$a_i(x_1, \ldots, x_m, w_1, \ldots, w_m) = \frac{\mu_i \ast \exp(w_i \ast x_i)}{\sum_{k=1}^{m} \mu_k \ast \exp(w_k \ast x_k)}$$

where:

| i,k | : indexes |
|---|---|
| m | : number of the prescribed stocks, m = 100 |
| $a_i$ | : weighting of a stock i at an instant (t+1) |
| $\mu_i$ | : prescribed weighting of a stock i in a reference portfolio (benchmark asset) |
| $w_1, ..., w_m$ | : parameters and weights |
| $x_1, ..., x_m$ | : forecast stock prices of the prescribed stocks at the instant (t+1) |
| exp (...) | : exponential function. |

**Revendications**

1. Ensemble d'éléments de calcul reliés entre eux, comprenant

   a) des premiers éléments de calcul d'entrée (101, 102) auxquels peuvent être amenées des premières valeurs de série temporelle, lesquelles décrivent respectivement un état d'un système considéré à un instant;
   b) des éléments de calcul de transformation (111, 112) pour la transformation des premières valeurs de série temporelle vers un espace prédéterminé, lesdits premiers éléments de calcul de transformation étant reliés aux premiers éléments de calcul d'entrée (101, 102), et des signaux transformés pouvant être prélevés au niveau desdits éléments de calcul de transformation, au moins deux signaux transformés concernant respectivement des instants successifs;
   c) un deuxième élément de calcul d'entrée (121) auquel peuvent être amenées des deuxièmes valeurs de série temporelle, lesquelles influent respectivement sur un état du système;
   d) un premier élément de calcul d'interconnexion (131), lequel est relié au deuxième élément de calcul d'entrée (121) ainsi qu'à un premier (111) et à un deuxième élément de calcul de transformation (112) de manière que le signal transformé du premier élément de calcul de transformation (111) peut être amené au premier élément de calcul d'interconnexion et qu'un signal pouvant être prélevé au niveau du premier élément de calcul d'interconnexion peut être amené au deuxième élément de calcul de transformation (112);
   e) des éléments de calcul de sortie (141, 142) reliés aux éléments de calcul de transformation (111, 112), un signal de sortie pouvant être prélevé au niveau de chaque élément de calcul de sortie.

2. Ensemble selon la revendication 1, dans lequel au moins une partie des éléments de calcul sont des neurones artificiels.

3. Ensemble selon la revendication 1 ou 2, dans lequel l'architecture d'au moins une partie des liens entre éléments de calcul est variable.

4. Ensemble selon l'une des revendications 1 à 3, dans lequel les liens font état, au moins en partie, de valeurs de poids identiques.

5. Ensemble selon l'une des revendications 1 à 4, comprenant des deuxièmes éléments de calcul d'interconnexion, lesquels sont respectivement reliés à un élément de calcul d'entrée et à un élément de calcul de transformation.

6. Ensemble selon l'une des revendications 1 à 5, comprenant des troisièmes éléments de calcul d'interconnexion, lesquels sont respectivement reliés à un élément de calcul de sortie et à un élément de calcul de transformation.

7. Ensemble selon l'une des revendications 1 à 6, comprenant des éléments de calcul additionnels associés entre eux, lesquels sont reliés à un élément de calcul de sortie et permettent d'exécuter une transformation prédéterminable.

8. Ensemble selon la revendication 7, dans lequel peut être établi un état optimisé du système dynamique moyennant l'utilisation de la transformation prédéterminable.

9. Ensemble selon la revendication 8, dans lequel les éléments de calcul additionnels associés entre eux permettent d'exécuter la transformation suivante:

$$a_i(x_1, \ldots, x_m, w_1, \ldots, w_m) = \frac{\mu_i * \exp(w_i * x_i)}{\displaystyle\sum_{k=1}^{m} \mu_k * \exp(w_k * x_k)}$$

dans laquelle

| | |
|---|---|
| i, k | sont des indices, |
| m | est le nombre d'actions prédéterminées, m = 100, |
| $a_i$ | est la pondération d'une action i à un instant (t + 1), |
| $\mu_i$ | est la pondération prédéterminée d'une action i dans un portefeuille de référence (« benchmark asset »), |
| $w_1, \ldots, w_m$ | sont des paramètres resp. des poids, |
| $x_1, \ldots, x_m$ | sont les cotes prédites des actions prédéterminées considérées à l'instant (t + 1) et |
| exp (...) | est une fonction exponentielle. |

**10.** Ensemble selon l'une des revendications 1 à 9, lequel est mis en oeuvre pour la détermination d'une dynamique d'un processus dynamique.

**11.** Ensemble selon la revendication 10, comprenant un dispositif de mesure pour capter des signaux physiques à l'aide desquels est décrit le processus dynamique.

**12.** Ensemble selon la revendication 10 ou 11 sans la revendication 9, lequel est mis en oeuvre pour déterminer la dynamique d'un processus dynamique dans un réacteur chimique.

**13.** Ensemble selon la revendication 10 ou 11, lequel est mis en oeuvre pour déterminer la dynamique d'un processus économique.

**14.** Procédé de détermination assistée par ordinateur d'une dynamique se trouvant à la base d'un processus dynamique, lequel comprend les étapes suivantes:

a) le processus dynamique est décrit par une première série temporelle avec des valeurs de série temporelle dans un premier espace d'état, au moins une première valeur de série temporelle de la première série temporelle décrivant un état du processus dynamique considéré à un premier instant;
b) la première valeur de série temporelle de la première série temporelle est transformée vers un deuxième espace d'état;
c) le processus dynamique est influencé par une deuxième série temporelle avec des valeurs de série temporelle dans un troisième espace d'état, au moins une première valeur de série temporelle de la deuxième série temporelle influant sur un état du processus dynamique;
d) la première valeur de série temporelle de la première série temporelle du deuxième espace d'état subit une application sur une deuxième valeur de série temporelle de la première série temporelle dans le deuxième espace d'état moyennant l'utilisation de la première valeur de série temporelle de la deuxième série temporelle dans le troisième espace d'état;
e) la dynamique du processus dynamique est établie sur la base des valeurs de série temporelle du deuxième espace d'état.

**15.** Procédé selon la revendication 14, dans lequel les valeurs de série temporelle sont des vecteurs de dimension prédéterminable.

**16.** Procédé selon la revendication 14 ou 15, dans lequel la deuxième valeur de série temporelle de la première série temporelle dans le deuxième espace d'état est rétrotransformée vers le premier espace d'état et dans lequel la deuxième valeur de série temporelle de la première série temporelle dans le premier espace d'état est transformée vers un quatrième espace d'état moyennant l'application d'une transformation prédéterminable.

**17.** Procédé selon la revendication 16, dans lequel est établi un état optimisé du système dynamique moyennant l'application de la transformation prédéterminable.

**18.** Procédé selon la revendication 17, dans lequel la transformation prédéterminable permet d'exécuter l'application suivante:

$$a_i(x_1, \ldots, x_m, w_1, \ldots, w_m) = \frac{\mu_i \ast \exp(w_i \ast x_i)}{\sum_{k=1}^{m} \mu_k \ast \exp(w_k \ast x_k)}$$

dans laquelle

| | |
|---|---|
| i, k | sont des indices, |
| m | est le nombre d'actions prédéterminées, m = 100, |
| $a_i$ | est la pondération d'une action i à un instant (t + 1), |
| $\mu_i$ | est la pondération prédéterminée d'une action i dans un portefeuille de référence (« benchmark asset »), |
| $w_1, ..., w_m$ | sont des paramètres resp. des poids, |
| $x_1, ..., x_m$ | sont les cotes prédites des actions prédéterminées considérées à l'instant (t + 1), |
| exp (...) | est une fonction exponentielle. |

**19.** Procédé selon l'une des revendications 14 à 18, dans lequel les valeurs de série temporelle sont établies sur la base de signaux physiques.

**20.** Procédé selon la revendication 19 sans la revendication 18, dans lequel les valeurs de série temporelle décrivent un processus dynamique dans un réacteur chimique.

**21.** Procédé selon la revendication 19, dans lequel les valeurs de série temporelle décrivent un processus économique.

**22.** Ensemble selon la revendication 1, lequel est mis en oeuvre pour la détermination assistée par ordinateur d'une dynamique se trouvant à la base d'un processus dynamique, dans lequel une première valeur de série temporelle décrivant le processus dynamique est amenée à l'ensemble et dans lequel ledit ensemble établit le signal de sortie sur la base duquel est déterminée la dynamique.

**23.** Procédé pour l'entraînement assisté par ordinateur de l'ensemble selon la revendication 1, dans lequel l'ensemble subit un entraînement moyennant l'utilisation de données d'entraînement prédéterminées, lesquelles sont amenées audit ensemble, des liens entre éléments de calcul étant gelés et / ou défaits en cours d'entraînement en dépendance d'une étape d'entraînement.

**24.** Procédé selon la revendication 23, dans lequel l'entraînement porte sur une compression et décompression, dans une première étape d'entraînement, et sur une prévision, dans une deuxième étape d'entraînement.

**25.** Procédé selon la revendication 23 ou 24, dans lequel l'ensemble présente les composantes additionnelles suivantes: éléments de calcul additionnels associés entre eux, lesquels sont reliés à un élément de calcul de sortie et lesquels permettent d'exécuter une transformation prédéterminable, et dans lequel lesdits éléments de calcul additionnels associés entre eux subissent un entraînement dans une étape d'entraînement additionnelle.

**26.** Procédé selon la revendication 25, dans lequel est établi un état optimisé du système dynamique moyennant l'application d'une transformation prédéterminable.

**27.** Procédé selon la revendication 26, dans lequel la transformation

$$a_i(x_1, \ldots, x_m, w_1, \ldots, w_m) = \frac{\mu_i \ast \exp(w_i \ast x_i)}{\sum_{k=1}^{m} \mu_k \ast \exp(w_k \ast x_k)}$$

prédéterminable permet d'exécuter l'application suivante: dans laquelle

| | |
|---|---|
| $i, k$ | sont des indices, |
| $m$ | est le nombre d'actions prédéterminées, $m = 100$, |
| $a_i$ | est la pondération d'une action $i$ à un instant $(t + 1)$, |
| $\mu_i$ | est la pondération prédéterminée d'une action $i$ dans un portefeuille de référence (« benchmark asset »), |
| $w_1, ..., w_m$ | sont des paramètres resp. des poids, |
| $x_1, ..., x_m$ | sont les cotes prédites des actions prédéterminées considérées à l'instant $(t + 1)$ et |
| $\exp (...)$ | est une fonction exponentielle. |

# FIG 1

# FIG 2

# FIG 3

# FIG 4

# FIG 5A

# FIG 5B

## FIG 5C

141  145

140 →  t

146  142

Xₜ₊₁

130  131

110 →  Sₜ ——C—— ( ) ——D—— Sₜ₊₁  112

111

B

B

100 →  t

A

101

E

eₓ

120  121

102

A

Xₜ₊₁

## FIG 7

| Input Vorverarbeitung | ~710 |

↓

| Kompression | ~720 |

↓

| Forecast | ~730 |

↓

| Dekompression | ~740 |

↓

| Output/ Nachbearbeitung | ~750 |

~700

# FIG 6

# FIG 8